# EUROPEAN PATENT APPLICATION

(11) **EP 2 309 705 A1**
(43) Date of publication of application: **13.04.2011**
(21) Application number: 09802697.4
(22) Date of filing: 28.07.2009
(51) Int. Cl.: H04M 1/02, G06F 1/16

(54) **MOBILE TERMINAL**

(30) Priority: 28.07.2008 JP 2008194085; 25.08.2008 JP 2008215912; 28.08.2008 JP 2008219787
(71) Applicant: Sharp Kabushiki Kaisha, Osaka-shi, Osaka 545-8522 (JP)
(72) Inventor: MAKINO, Ninoru c/o SHARP KABUSHIKI KAISHA, Osaka-shi, Osaka 545-8522 (JP); SAITO, Yuta c/o SHARP KABUSHIKI KAISHA, Osaka-shi, Osaka 545-8522 (JP); KONISHI, Hiroshi c/o SHARP KABUSHIKI KAISHA, Osaka-shi, Osaka 545-8522 (JP)
(74) Representative: Müller - Hoffmann & Partner
(86) International application number: PCT/JP2009/003553
(87) International publication number: WO 2010/013448

(57) **Abstract**

In a mobile device that can be switched between the portrait orientation and the landscape orientation, improvements are made so that a swivel casing can be supported stably while maintaining a good appearance of the mobile device. A swivel casing 3 of a mobile phone 1 is supported by a swivel support mechanism 10 so that it swivels from the portrait orientation to the landscape orientation or from the landscape orientation to the portrait orientation. A movement opening 25 for allowing the swivel support mechanism 10 to move therethrough is formed in a middle portion in a thickness direction of a side surface of the swivel casing 3.

## Description

### TECHNICAL FIELD

The present invention relates to a mobile device whose swivel casing is supported so that it can be swiveled from the portrait orientation to the landscape orientation or from the landscape orientation to the portrait orientation.

### BACKGROUND ART

In recent years, with the start of digital terrestrial television broadcasting, some mobile devices such as mobile phones are now equipped with the TV broadcast receiving function and the Internet connection function. Therefore, with mobile devices, there is a need both to improve the portability thereof and to increase the size of the display screen so that images are seen more easily. Furthermore, due to the nature of a TV image and the Internet screen, there is a need for TV viewing and Internet connection with the display screen in the landscape orientation.

In view of this, clamshell mobile phones are known in the art in which a first casing and a second casing are foldably connected together by a hinge portion, and a liquid crystal display portion is supported on the first casing so that it can be switched between the portrait orientation and the landscape orientation, as disclosed in Patent Document 1, for example.

### CITATION LIST

### PATENT DOCUMENT

PATENT DOCUMENT 1: Japanese Published Patent Application No. 2006-211576
PATENT DOCUMENT 2: Japanese Published Patent Application No. S63-146267

### SUMMARY OF THE INVENTION

### TECHNICAL PROBLEM

However, such a mobile device as disclosed in Patent Document 1 has a three-layer structure, including the first casing, the liquid crystal display portion (the swivel casing) and the second casing, when the first casing and the second casing are folded together, and the first casing portion protrudes, thus not resulting in a good appearance.

Particularly, when the swivel casing is in the landscape orientation, the swivel casing is supported only by the first guide pin and the second guide pin, and it is therefore likely to be loose.

The present invention has been made in view of the above, and a primary object thereof is to realize a mobile device that can be switched between the portrait orientation and the landscape orientation, wherein the swivel casing can be stably supported while maintaining a good appearance.

Now, an electronic device such as a mobile device may include an opening provided in the casing, it is a known technique for closing such an opening to provide a first shutter for closing a cartridge insertion hole when no cartridge is inserted therein, and a second shutter for sliding along the main body upon completion of cartridge loading to close the cartridge insertion hole, as shown in Patent Document 2, for example.

However, when such a movement opening is provided, the opening becomes conspicuous to deteriorate the appearance, and dust or a finger may enter the opening inadvertently.

In view of this, one may consider applying such a shutter structure as disclosed in Patent Document 2, but this shutter structure is a complicated structure with two shutters and requires a large space, and cannot be applied in a case where a shutter is provided in a small space such as in a mobile device.

With a conventional shutter structure, an object moving through the opening normally enters/exits the opening while moving in a straight line, and therefore the conventional shutter structure cannot be applied to a structure for opening/closing an opening where a swiveling object enters/exits.

Another object of the present invention is to provide a swivel support mechanism for supporting a swivel casing that is swiveling, wherein the swivel support mechanism is accommodated in a swivel casing with a good appearance without inhibiting the swivel action of the swivel casing.

### SOLUTION TO THE PROBLEM

In order to achieve the primary object set forth above, a swivel support mechanism is sandwiched in a swivel casing in the present invention.

Specifically, a first aspect includes:
a swivel casing;
a swivel support mechanism for supporting the swivel casing so that the swivel casing swivels from a portrait orientation to a landscape orientation or from the landscape orientation to the portrait orientation; and
a movement opening formed in a middle portion in a thickness direction of a side surface of the swivel casing for allowing for a movement of the swivel support mechanism therethrough.

With the above configuration, when the swivel casing is in the portrait orientation or in the landscape orientation, the swivel support mechanism can be accommodated in the movement opening of the swivel casing, and the swivel support mechanism does not protrude, resulting in a good appearance. Since the swivel support mechanism always moves through the movement opening, it is loose only within the clearance from the movement opening during swiveling of the swivel casing, and even if an unexpected impact is applied to the swivel casing, the load is transmitted also to the periphery of the movement opening, thus preventing the load from being localized only at the swivel support mechanism, making it less likely that the swivel support mechanism is damaged.

A second aspect is according to the first aspect, wherein
the swivel support mechanism is connected to a fixed casing, and
a display is provided in at least one of the swivel casing and the fixed casing.

That is, the display may be provided both in the swivel casing and the fixed casing or only in one of the swivel casing and the fixed casing. Particularly, when the display is provided on the swivel casing side, the display screen is switched between the portrait orientation and the landscape orientation, and it is therefore possible to comfortably view TV programs or to read/write text in a landscape orientation with an appropriate screen orientation.

A third aspect is according to the second aspect, wherein
a display is provided in the swivel casing, and
an operation section is provided in the fixed casing.

With the above configuration, if the swivel casing is put in the landscape orientation when receiving TV, an image in the landscape orientation can be viewed without rotating the fixed casing, and one can use the operation section of the fixed casing with an ordinary key arrangement as when the swivel casing is in the portrait orientation. Therefore, one can comfortably perform an input operation with a two-way service such as TV shopping while watching an image in the landscape orientation.

A fourth aspect is according to one of the first to third aspects, wherein
the swivel support mechanism includes:
a first slide member and a second slide member which slide during swiveling; and
a first slide guide and a second slide guide for allowing the first slide member and the second slide member to slide in different directions.

That is, the first slide guide and the second slide guide may be guide apertures, guide grooves, guide rails, etc., for guiding movements along straight lines or curved lines, and may have a straight shape or a curved shape. The first slide member and the second slide member may be provided in a shaft shape, a U-shaped projection, etc., in accordance with the shape of the first slide guide and the second slide guide. Thus, by optimizing the shape of the first slide guide and the second slide guide, it is possible to obtain an optimal swivel path of the swivel casing. For example, it is possible to realize a swivel operation in which the swivel casing is swiveled clockwise and then back, a swivel operation in the swivel casing is swiveled counterclockwise and then back, and a swivel operation in which it is swiveled either clockwise or counterclockwise and then back. Since the swivel casing can be swiveled so as not to contact other members, it is no longer necessary to round off the corner portions of the swivel casing, and the display can be provided in a large size.

A fifth aspect is according to the fourth aspect, wherein
the first slide member and the second slide member are connected to the swivel casing, and
the first slide guide and the second slide guide are formed in a flat guide plate, and the guide plate can move through the movement opening during swiveling.

With the above configuration, the first slide guide and the second slide guide are formed in a flat guide plate, thereby avoiding an increase in the thickness, and since it is only necessary to move the guide plate having a small thickness through the movement opening, it is possible to reduce the width of the movement opening and to reduce the overall thickness of the swivel casing.

A sixth aspect is according to the fourth or fifth aspect, wherein
the swivel casing is formed by a front cabinet and a rear cabinet connected together by a partition surface parallel to a thickness direction,
the display is fitted into the front cabinet, and
the movement opening is formed by cutting off an edge portion of the rear cabinet on a side of the partition surface.

With the above configuration, the swivel casing is formed by the front cabinet and the rear cabinet, and the movement opening is provided by cutting a portion off the rear cabinet, but not the front cabinet in which the display having a predetermined thickness is fitted. Therefore, the display and the fixed support mechanism do not interfere with each other. Therefore, the swivel support mechanism is sandwiched between the front cabinet and the rear cabinet while avoiding an increase in the thickness.

A seventh aspect is according to the sixth aspect, wherein
a pair of support mechanism fixing boss portions are formed on a front side of the rear cabinet,
support mechanism fixing holes are formed in the front cabinet at positions corresponding to the pair of support mechanism fixing boss portions,
the first slide member and the second slide member include boss insertion holes through which the support mechanism fixing boss portions are inserted, and
fastening members are inserted through, and fastened to, the support mechanism fixing holes with the support mechanism fixing boss portions inserted through the boss insertion holes, thereby connecting the swivel support mechanism to the swivel casing while being interposed therein.

With the above configuration, with the support mechanism fixing boss portions of the rear cabinet inserted through the boss insertion holes of the first slide member and the second slide member and the fastening members inserted through the support mechanism fixing boss portions, the fastening members are inserted through the fastening member insertion holes of the front cabinet and fastened to the support mechanism fixing boss portions. Therefore, the swivel support mechanism is firmly fastened simply and at an accurate position.

An eighth aspect is according to the seventh aspect, wherein
the first slide member and the second slide member are inserted through the support mechanism fixing boss portions while being tentatively held by a plate-shaped tentative holding plate.

With the above configuration, if the first slide member and the second slide member are connected while being tentatively held to the tentative holding plate, and the first slide member and the second slide member are engaged with the first slide guide and the second slide guide, thereby providing the swivel support mechanism as a unit in advance, the swivel support mechanism is connected to the swivel casing by attaching it to the swivel casing, together with the tentative holding plate, on the assembly line, thus making the assembly very easy. After the attachment, the tentative holding plate serves as a reinforcement member.

A ninth aspect is according to one of the fourth to eighth aspects, wherein
the swivel support mechanism includes a biasing mechanism for assisting in the swivel by biasing at least one of the first slide member and the second slide member.

With the above configuration, the biasing mechanism makes it easier to swivel the swivel casing, thus enabling the swivel operation with one hand, and the swivel casing is stable in the landscape orientation or in the portrait orientation.

A tenth aspect is according to one of the first to ninth aspects, wherein a hinge portion for foldably connecting the swivel casing with the fixed casing,
wherein the swivel support mechanism is connected to the fixed casing via the hinge portion.

With the above configuration, when the swivel casing and the fixed casing are folded together about the hinge portion, the swivel support mechanism is accommodated in the movement opening of the swivel casing, and it therefore has a good appearance, appearing at a glance to be an ordinary clamshell mobile device with no swivel support mechanism. The swivel casing in the landscape orientation can be viewed while holding the fixed casing in hand.

An eleventh aspect is according to the tenth aspect, wherein
the swivel casing swivels with a predetermined distance from the hinge portion.

With the above configuration, there is no need to round off the corner portion of the swivel casing in order to avoid contact with the hinge portion, and it is possible to increase the size of the swivel casing. Where the display is provided in the swivel casing, the display can be provided in a large size, thereby making the image easier to view.

A twelfth aspect is according to the tenth or eleventh aspect, wherein
an end portion of the guide plate on a side of the hinge portion is bent, and
the hinge portion includes a hinge shaft insertion hole, and a hinge shaft of the hinge portion is inserted through the hinge shaft insertion hole.

With the above configuration, the hinge shaft is supported by the guide plate, which is a rigidity member, and it is therefore possible to obtain a hinge portion with a high rigidity while avoiding an increase in the number of parts.

A thirteenth aspect is according to one of the tenth to twelfth aspects, wherein
the guide plate and the hinge portion are interposed between a front hinge portion casing and a rear hinge portion casing which are separated from each other in the thickness direction, and
portions of the front hinge portion casing and the rear hinge portion casing that are hidden when the swivel casing is in the portrait orientation are each covered by a decorative metal thin plate.

With the above configuration, the strength and the wear resistance are improved while avoiding an increase in the thickness, and the appearance of the portion exposed during swiveling of the swivel casing is also improved.

A fourteenth aspect is according to the thirteenth aspect, wherein
the decorative thin plate includes a plurality of ribs projecting on a front side.

With the above configuration, the gap between the decorative thin plate and the inside of the swivel casing is minimized, thereby preventing the looseness.

A fifteenth aspect is according to one of the tenth to fourteenth aspects, wherein
a rear side of the fixed casing can be placed on a placement surface with the swivel casing being open in the landscape orientation.

With the above configuration, one can watch a TV image for a long time with the TV image displayed on the display in the swivel casing in the landscape orientation.

A sixteenth aspect is according to one of the first to ninth aspects, wherein
the fixed casing is connected to the swivel casing so that the fixed casing cannot be folded/unfolded with respect to the swivel casing, and
the swivel support mechanism is connected directly to the fixed casing.

With the above configuration, even with what is known as a candy bar-type mobile device in which the swivel casing and the fixed casing are coplanar with each other, the swivel support mechanism is accommodated in the movement opening of the swivel casing, thus resulting in a good appearance.

A seventeenth aspect is according to the sixteenth aspect, wherein
the fixed casing can move through the movement opening during swiveling.

With the above configuration, it is possible to realize a compact shape in which the fixed casing is completely accommodated in the movement opening of the swivel casing.

An eighteenth aspect is according to one of the first to seventeenth aspects, wherein
the swivel support mechanism includes a projecting portion projecting in a thickness direction of the swivel casing, and
the swivel casing includes a slide depression along which the projecting portion slides during swiveling.

With the above configuration, by ensuring that the projecting portion is always in contact with the slide depression of the swivel casing, it is possible with a simple configuration to further prevent the looseness of the swivel casing.

In order to achieve the other object set forth above, the movement opening of the swivel casing may be closed by a side surface of the swivel support mechanism supporting the swivel casing and a side shield member which can pivot, when the swivel casing is in the portrait orientation.

Specifically, a nineteenth aspect is according to one of the first to eighteenth aspects, wherein
a side shield member pivoted by the swivel support mechanism which moves as the swivel casing swivels from the portrait orientation to the landscape orientation or from the landscape orientation to the portrait orientation,
in the portrait orientation, the movement opening is covered by the side shield member and a side surface of the swivel support mechanism, and
in the landscape orientation, the side shield member is accommodated in the swivel casing, and the swivel support mechanism is accommodated in an area which has been closed by the side shield member.

With the above configuration, since the side shield member is pivoted as the swivel support mechanism supporting the swivel casing swivels, the side shield member does not inhibit the swivel action of the swivel casing. In the portrait orientation, the movement opening is closed by the side shield member and the swivel support mechanism, whereas in the landscape orientation, the side shield member is accommodated in the swivel casing and the swivel support mechanism is accommodated in the movement opening. Therefore, in either orientation, the movement opening is covered, thus providing a good appearance and preventing dust from entering the movement opening.

A twentieth aspect is according to the nineteenth aspect, wherein
the side shield member includes:
a side shield member main body that can pivot about a pivotal shaft provided in a vicinity of an end portion periphery of the movement opening in the swivel casing that is opposite to the swivel support mechanism, and
a side biasing member for biasing the side shield member main body in a direction of covering the movement opening.

With the above configuration, the side shield member is biased by the side biasing member in the direction of covering the movement opening. Therefore, in the swivel from the landscape orientation where the swivel support mechanism is accommodated in the movement opening to the portrait orientation, the side shield member main body is biased by the side biasing member to automatically pivot in the direction of covering the movement opening. This eliminates the need for the operation of opening/closing the side shield member.

A twenty-first aspect is according to the nineteenth or twentieth aspect, wherein
when the side shield member is closed in the portrait orientation, a surface of the side shield member, a side surface of the swivel support mechanism, and a surface of the swivel casing are continuous with one another.

With the above configuration, the side shield member, the swivel support mechanism and the swivel casing form a continuous surface when the swivel casing is in the portrait orientation, which gives a good appearance and a good feel and prevents dust from entering.

A twenty-second aspect is according to the twentieth or twenty-first aspect, wherein
the side shield member pivots as a pivotal end of the side shield member opposite to the pivotal shaft is pushed by a side end portion of the side shield member of the swivel support mechanism.

With the above configuration, the side shield member is pushed and pivoted by the side end portion of the side shield member of the swivel support mechanism as the swivel support mechanism swivels. Thus, it is possible with a simple configuration to prevent the side shield member from inhibiting the swivel of the swivel support mechanism.

A twenty-third aspect is according to the twenty-second aspect, wherein
the side shield member includes a pivot regulating member for regulating inward pivoting of the side shield member even if the side shield member is pressed when the movement opening is closed by the side shield member in the portrait orientation.

With the above configuration, in the portrait orientation of the swivel casing, even if the side shield member closing the movement opening is pressed by a finger, etc., the pivot regulating member prevents the side shield member from further pivoting inward, and one will therefore not pinch a finger, etc., inadvertently.

A twenty-fourth aspect is according to the twenty-third aspect, wherein
the pivot regulating member is pivotally provided on a pivotal end side of the side shield member, and
a regulating projection with which a distal end side of the pivot regulating member engages when the side shield member is closed is provided at an end portion of the swivel support mechanism on a side of the side shield member.

With the above configuration, when the side shield member is closed, the pivotal end of the pivot regulating member is stopped by the regulating projection on the side of the swivel support mechanism and does not further pivot inwardly. Therefore, even if one pushes the side shield member with a finger inadvertently, one will not pinch the finger.

A twenty-fifth aspect is according to the twenty-fourth aspect, wherein
the pivot regulating member is biased by the side biasing member toward the regulating projection.

With the above configuration, the side shield member and the pivot regulating member are both biased by a single side biasing member, thereby reducing the number of parts and requiring only a small space.

A twenty-sixth aspect is according to the twenty-fifth aspect, wherein
the engagement between the distal end side of the pivot regulating member and the regulating projection of the swivel support mechanism is released as the side shield member pivots by being pushed by the side end portion of the side shield member of the swivel support mechanism.

With the above configuration, the locking of the side shield member by the pivot regulating member is released as the swivel of the swivel support mechanism is started, and therefore there is no need to perform an extra operation for releasing the lock.

A twenty-seventh aspect is according to the twenty-second aspect, wherein
a pivot preventing depression with which the pivotal end of the side shield member engages when the side shield member is closed in the portrait orientation to prevent the side shield member from pivoting is provided at an end portion of the swivel support mechanism on a side of the side shield member.

With the above configuration, the pivotal end of the side shield member fits into the pivot preventing depression of the swivel support mechanism in the portrait orientation, it is prevented from pivoting inwardly even if one pushes the side shield member by a finger inadvertently.

Moreover, in order to achieve the other object set forth above, a lower shield member may be provided, which closes the movement opening in the corner portion of the swivel casing in the landscape orientation, and is accommodated in the swivel casing in the portrait orientation.

Specifically, a twenty-eighth aspect is according to one of the first to twenty-seventh aspects, wherein
a lower shield member made to slide in a thickness direction of the swivel casing by the swivel support mechanism moving through the movement opening so as to close the movement opening in a corner portion of the swivel casing in the landscape orientation, and to be completely accommodated in the swivel casing in the portrait orientation.

With the above configuration, the lower shield member which has closed the movement opening located in the corner portion of the swivel casing in the landscape orientation slides in the thickness direction to be accommodated in the swivel casing as if it were pushed away as the swivel support mechanism moves through the movement opening when the swivel casing is switched to the portrait orientation so that it does not inhibit the swivel action of the swivel casing. The movement opening through which the swivel support mechanism moves out as it swivels oppositely from the portrait orientation to the landscape orientation is gradually closed by the lower shield member which slides out of the swivel casing. Therefore, either in the portrait orientation or in the landscape orientation, the movement opening is covered, thus providing a good appearance and preventing dust from entering the movement opening.

A twenty-ninth aspect is according to the twenty-eighth aspect, wherein
the lower shield member includes:
a lower shield member main body having an L-letter shape as seen from above which can be accommodated in a lower shield member accommodating section provided in a periphery of the movement opening in a corner portion of the swivel casing; and
a lower biasing member accommodated in the lower shield member accommodating section for biasing the lower shield member main body in a direction of covering the movement opening.

With the above configuration, the lower shield member is biased by the lower biasing member in the direction of covering the movement opening. Therefore, when it swivels from the portrait orientation, where the swivel support mechanism is accommodated in the movement opening, to the landscape orientation, the lower shield member main body is biased by the lower biasing member to automatically cover the movement opening. This eliminates the need for the operation of opening/closing the lower shield member.

A thirtieth aspect is according to the twenty-eighth or twenty-ninth aspect, wherein
a tapered portion for guiding the lower shield member main body in such a direction that the lower shield member main body is accommodated in the lower shield member accommodating section is formed in a portion of the lower shield member main body which the swivel support mechanism first comes into contact with when the swivel casing swivels from the landscape orientation to the portrait orientation.

With the above configuration, when the swivel casing swivels from the landscape orientation to the portrait orientation, the swivel support mechanism first comes into contact with the tapered portion of the lower shield member main body, and the lower shield member main body is guided by the tapered portion to be smoothly accommodated in the lower shield member accommodating section.

A thirty-first aspect is according to the twenty-ninth or thirtieth aspect, wherein the lower biasing member is in-mold molded along one side of the lower shield member main body.

With the above configuration, even if the lower biasing member which is required to be elastic and the lower shield member main body for which the appearance is considered more important are formed by different materials, the lower biasing member and the lower shield member main body are integrally molded together, and therefore the number of parts is reduced and a complicated shape can be realized since it is a molded product.

A thirty-second aspect is according to the thirty-first aspect, wherein
the lower biasing member is a blade spring, wherein: a buried portion of the blade spring buried in the lower shield member main body and an exposed portion thereof exposed to an outside from the lower shield member main body are connected together only by a connecting portion at a center of the exposed portion in a longitudinal direction; leg portions formed at opposite ends of the exposed portion in the longitudinal direction are in contact with a bottom surface of the lower shield member accommodating section; and the lower shield member main body inclines so as to twist the connecting portion and the exposed portion is deformed so that the connecting portion slides in a thickness direction of the swivel casing.

With the above configuration, since the elastic buried portion is buried in the lower shield member main body, and the buried portion and the exposed portion are connected together only by the connecting portion, and the lower shield member main body inclines while twisting the connecting portion. When the entire lower shield member main body is pushed toward the bottom surface of the lower shield member accommodating section, the exposed portion which is in contact with the lower shield member accommodating section via a pair of leg portions is deformed so as to slide the connecting portion toward the bottom surface. Thus, the lower shield member main body smoothly slides to be accommodated in the lower shield member accommodating section, and the lower shield member does not inhibit the swivel of the swivel casing. When the swivel support mechanism comes into contact with the other side of the lower shield member main body where the lower biasing member is absent, the other side inclines, and the side where the lower biasing member is present swivels about the longitudinal direction. Also in this case, the swivel of the swivel casing is not inhibited by the lower shield member as the blade spring inclines, deforms, etc., in the lower shield member accommodating section.

A thirty-third aspect is according to one of the twenty-eighth to thirty-second aspects, wherein
when the movement opening is completely closed by the lower shield member in the landscape orientation, a surface of the lower shield member and a surface of the swivel casing are continuous with each other.

With the above configuration, the lower shield member and the swivel casing together form a continuous surface when the swivel casing is in the landscape orientation, which gives a good appearance and a good feel and prevents dust from entering.

### ADVANTAGES OF THE INVENTION

According to the first aspect above, a movement opening allowing for the movement of the swivel support mechanism, which supports the swivel casing so that it swivels between the portrait orientation and the landscape orientation, is formed in a middle portion in a thickness direction of the side surface of the swivel casing, and it is therefore possible to stably support the swivel casing while providing a good appearance of a mobile device which can be switched between the portrait orientation and the landscape orientation.

According to the nineteenth aspect above, a movement opening allowing for the movement of the swivel support mechanism, which supports the swivel casing so that it swivels between the portrait orientation and the landscape orientation, is formed in a middle portion in a thickness direction of the side surface of the swivel casing, and the movement opening is covered by the side shield member pivoted by the swivel support mechanism and the side surface of the swivel support mechanism. Therefore, it is possible to accommodate the swivel support mechanism in the swivel casing with a good appearance without inhibiting the swivel action of the swivel casing.

Moreover, according to the twenty-eighth aspect above, a movement opening allowing for the movement of the swivel support mechanism, which supports the swivel casing so that it swivels between the portrait orientation and the landscape orientation, is formed in a middle portion in a thickness direction of the side surface of the swivel casing, and the lower shield member is provided to close the movement opening in the corner portion of the swivel casing in the landscape orientation while being completely accommodated in the swivel casing in the portrait orientation. Therefore, the swivel support mechanism can be accommodated in the swivel casing with a good appearance without inhibiting the swivel action of the swivel casing.

### BRIEF DESCRIPTION OF THE DRAWINGS

[FIG. 1] A perspective view showing how a swivel support mechanism of a mobile phone moves through a movement opening according to an embodiment of the present invention as seen from the rear side.
[FIG. 2] A perspective view showing the mobile phone in a folded position.
[FIG. 3] A perspective view showing the mobile phone in the open position where the swivel casing is in the portrait orientation as seen from the front side.
[FIG. 4] A perspective view showing the mobile phone at a point during an operation of switching the swivel casing to the portrait orientation or the landscape orientation as seen from the front side.
[FIG. 5] A perspective view showing the mobile phone in the open position where the swivel casing is in the landscape orientation as seen from the front side.
[FIG. 6] A perspective view showing the mobile phone where the swivel casing is in the portrait orientation as seen from the rear side.
[FIG. 7] A perspective view showing the mobile phone at a point during an operation of switching the swivel casing to the portrait orientation or the landscape orientation as seen from the rear side.
[FIG. 8] A perspective view showing the mobile phone at a point during an operation of switching the swivel casing to the portrait orientation or the landscape orientation as seen from the rear side.
[FIG. 9] A perspective view showing the mobile phone at a point during an operation of switching the swivel casing to the portrait orientation or the landscape orientation as seen from the rear side.
[FIG. 10] A perspective view showing the mobile phone where the swivel casing is in the landscape orientation as seen from the rear side.
[FIG. 11] An exploded perspective view showing the swivel casing.
[FIG. 12] A perspective view showing the front cabinet as seen from the front side.
[FIG. 13] A right side view showing the front cabinet.
[FIG. 14] A perspective view showing the rear cabinet as seen from the front side.
[FIG. 15] A right side view showing the rear cabinet.
[FIG. 16] A back view showing a state where the rear cabinet and the rear-side decorative thin plate are removed.
[FIG. 17] A cross-sectional view taken along line XVII-XVII of FIG. 16.
[FIG. 18] A back view showing a guide plate before leg portions are bent.
[FIG. 19] A perspective view showing the guide plate, the first slide pin and the second slide pin assembled into a unit by a tentative holding plate as seen from the rear side.
[FIG. 20] A back view showing the swivel support mechanism where the swivel casing is in the portrait orientation.
[FIG. 21] A back view showing the swivel support mechanism at a point during an operation of switching the swivel casing to the portrait orientation or the landscape orientation.
[FIG. 22] A back view showing the swivel support mechanism at a point during an operation of switching the swivel casing to the portrait orientation or the landscape orientation.
[FIG. 23] A back view showing the swivel support mechanism where the swivel casing is in the landscape orientation.
[FIG. 24] An exploded perspective view showing the swivel support mechanism.
[FIG. 25] A perspective view showing a front hinge portion casing as seen from the front side.
[FIG. 26] A back view of the front hinge portion casing.
[FIG. 27] A perspective view showing a rear hinge portion casing as seen from the front side.
[FIG. 28] A perspective view showing a state where the rear hinge portion casing of the swivel casing is removed as seen from the rear side.
[FIG. 29] A perspective view showing a side shield member on an enlarged scale.
[FIG. 30] Showing the side shield member on an enlarged scale, where (a) is a back view and (b) is a side view.
[FIG. 31] A perspective view showing the lower shield member on an enlarged scale.
[FIG. 32] A perspective view showing the lower shield member on an enlarged scale.
[FIG. 33] A perspective view showing the lower shield member on an enlarged scale.
[FIG. 34] A bottom view of a first casing showing how a lower appearance portion of the lower shield member opens/closes a lower opening.
[FIG. 35] A bottom view of the first casing showing how the lower appearance portion of the lower shield member opens/closes the lower opening.
[FIG. 36] A bottom view of the first casing showing how the lower appearance portion of the lower shield member opens/closes the lower opening.
[FIG. 37] A partial vertical cross-sectional view of the first casing showing how the lower appearance portion of the lower shield member opens/closes a side opening.
[FIG. 38] A partial vertical cross-sectional view of the first casing showing how the lower appearance portion of the lower shield member opens/closes the side opening.
[FIG. 39] A partial vertical cross-sectional view of the first casing showing how the lower appearance portion of the lower shield member opens/closes the side opening.
[FIG. 40] A horizontal cross-sectional view of the first casing showing how a blade spring deforms along with the movement of the swivel support mechanism.
[FIG. 41] A horizontal cross-sectional view of the first casing showing how the blade spring deforms along with the movement of the swivel support mechanism.
[FIG. 42] A horizontal cross-sectional view of the first casing showing how the blade spring deforms along with the movement of the swivel support mechanism.
[FIG. 43] A back view showing the swivel support mechanism where the swivel casing is in the portrait orientation according to a variation of the present embodiment.
[FIG. 44] A back view showing the swivel support mechanism at a point during an operation of switching the swivel casing to the portrait orientation or the landscape orientation according to the variation.
[FIG. 45] A back view showing the swivel support mechanism at a point during an operation of switching the swivel casing to the portrait orientation or the landscape orientation according to the variation.
[FIG. 46] A back view showing the swivel support mechanism where the swivel casing is in the landscape orientation according to the variation.
[FIG. 47] A perspective view showing the side shield member according to the variation on an enlarged scale.
[FIG. 48] A perspective view showing the side shield member according to the variation on an enlarged scale.
[FIG. 49] A diagram illustrating the shape of guide grooves according to another embodiment.

### DESCRIPTION OF EMBODIMENTS

An embodiment of the present invention will now be described with reference to the drawings.

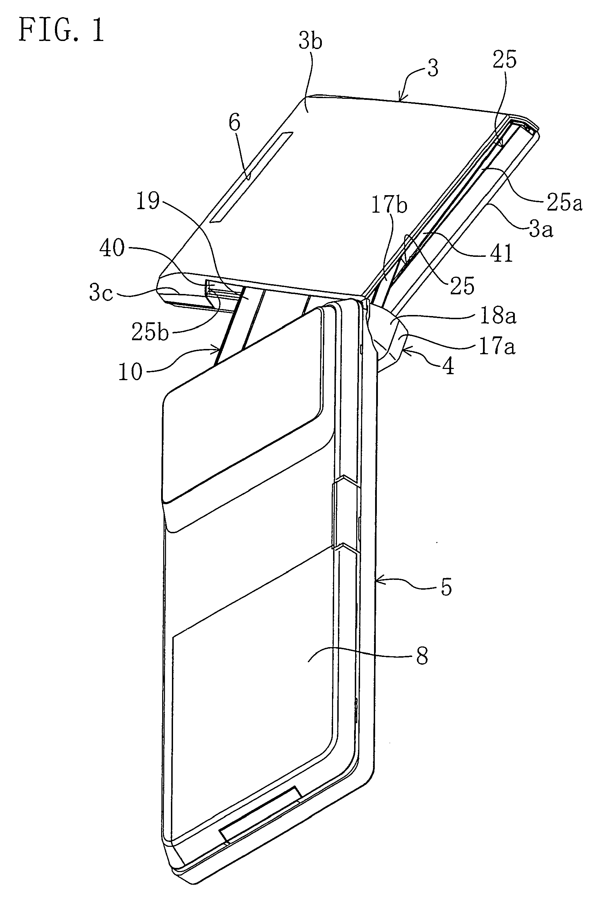

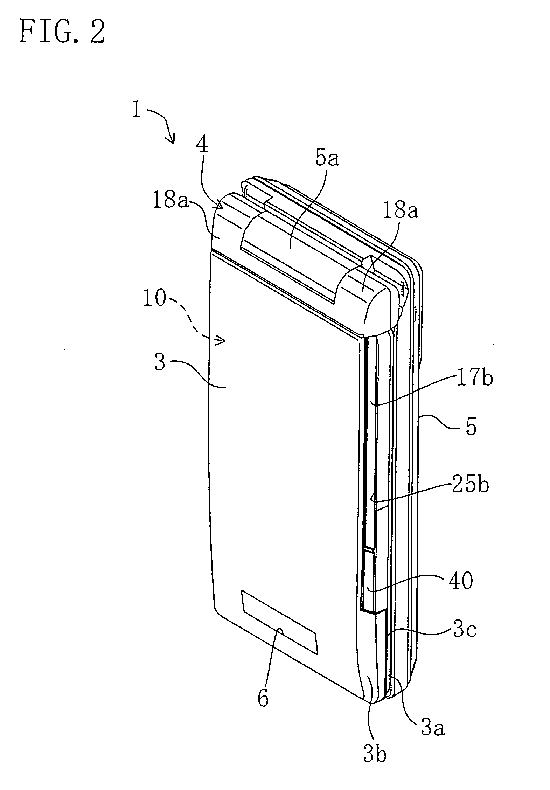

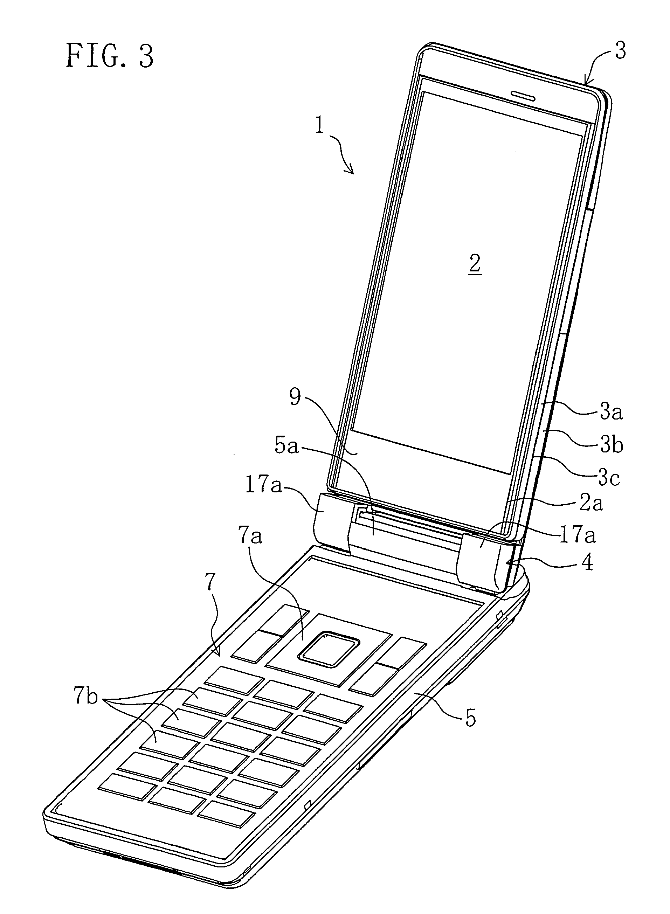

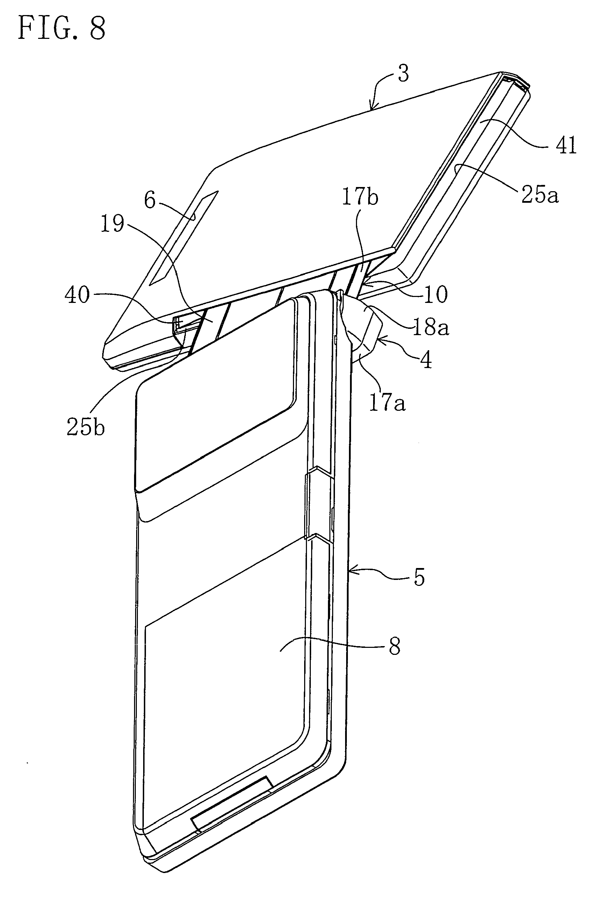

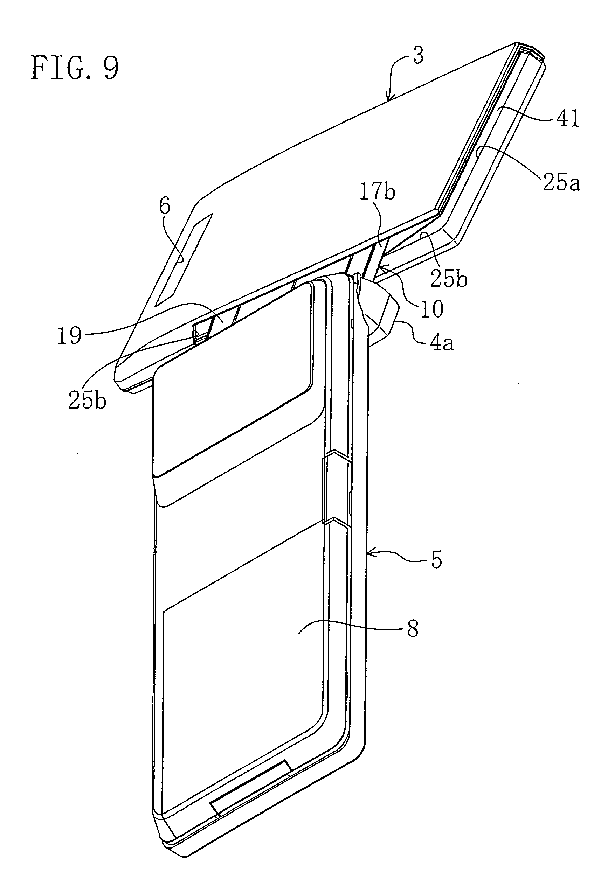

FIGS. 1-10 show a clamshell mobile phone 1 as a mobile device of an embodiment of the present invention, and the mobile phone 1 includes a thin plate-shaped swivel casing 3 with a display 2 on the front side thereof. The swivel casing 3 is foldably connected to a fixed casing 5 about a hinge portion 4. Thus, as shown in FIG. 2, the swivel casing 3 and the fixed casing 5 together form a thin rectangular parallelepiped shape when folded together. On the other hand, as shown in FIG. 3, when the swivel casing 3 is opened about the hinge portion 4, the display 2 in a portrait orientation appears on the front side.

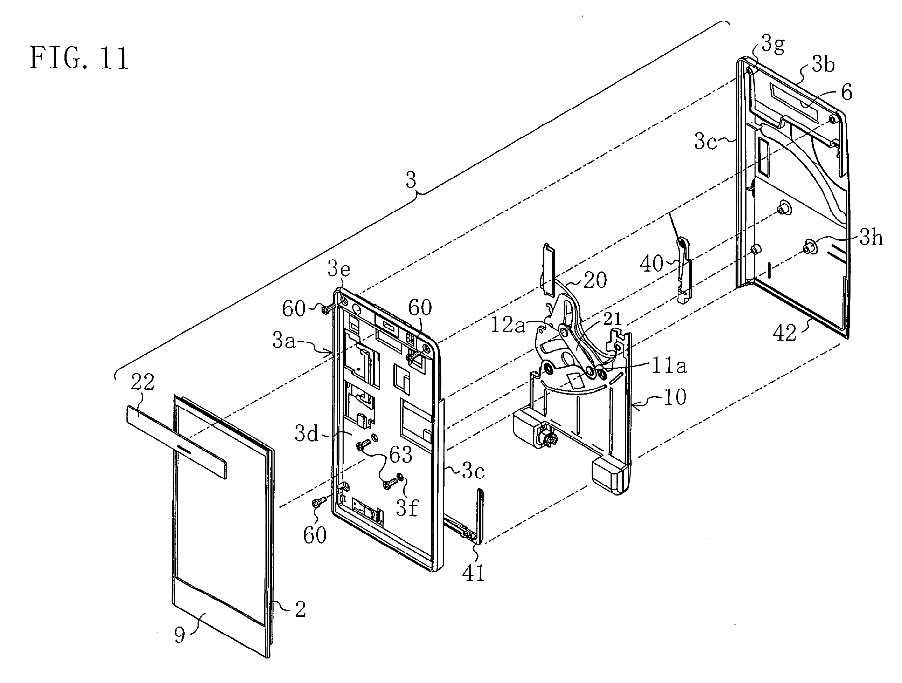

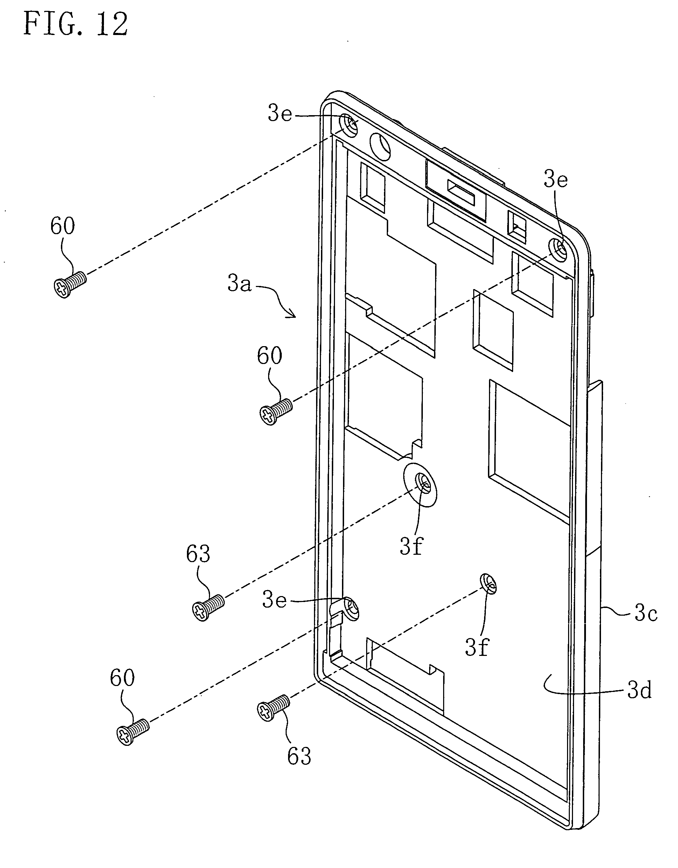

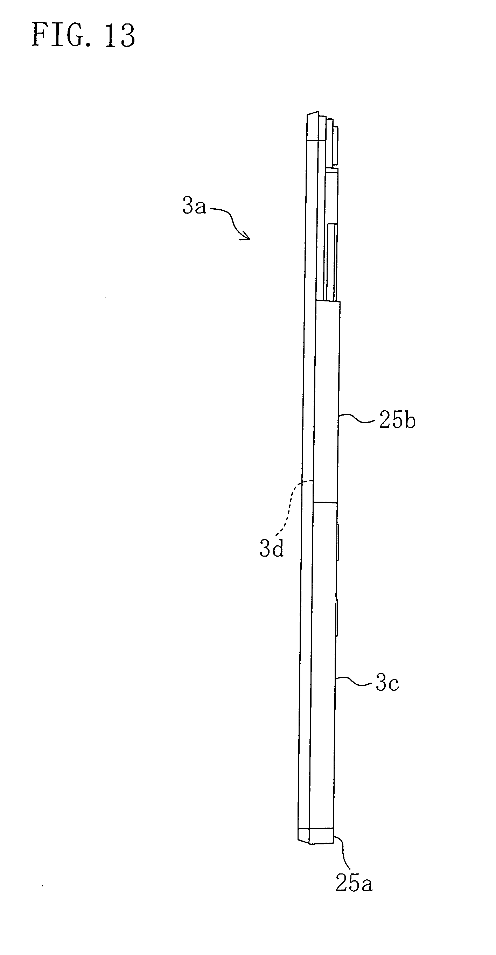

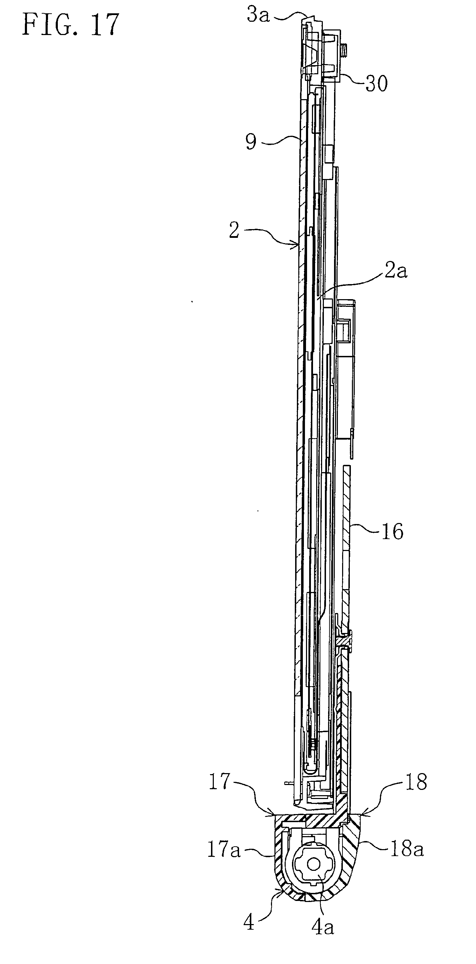

As shown in FIGS. 11-15, the swivel casing 3 includes a front cabinet 3a and a rear cabinet 3b, both rectangular dish-shaped, which are connected together along a partition surface 3c which is parallel to the thickness direction. While the front cabinet 3a and the rear cabinet 3b may be either molded resin parts or molded metal parts, the front cabinet 3a in the present embodiment is formed by a light and rigid material such as a magnesium alloy. Formed on the front side of the front cabinet 3 a is a display accommodating depressed portion 3d for accommodating the display 2 with a display substrate 2a (shown only in FIG. 17) placed on the back side. With the display 2 fitted into the display accommodating depressed portion 3d, the structure is covered on the front side by a display cover 9 formed by an acrylic plate or a glass plate. The front cabinet 3a includes cabinet fastening through holes 3e, two along the upper edge and another at a lower position, for fastening together the front cabinet 3a and the rear cabinet 3b. Note that the upper side of the front cabinet 3a is covered by an upper-side cover 22. A pair of support mechanism fixing holes 3f are diagonally arranged with a predetermined distance therebetween in a portion of the front cabinet 3a that is at the center in the left-right direction and in a vertically intermediate section.

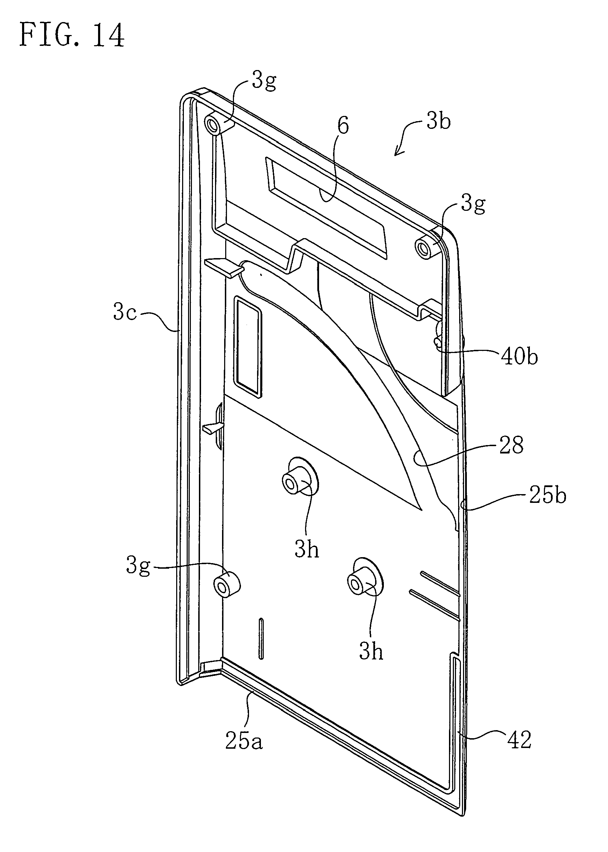

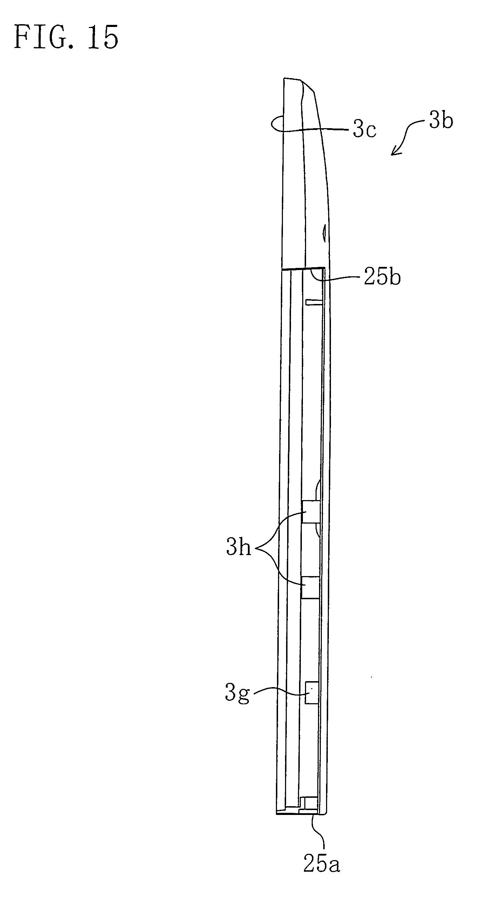

As shown in FIGS. 14 and 15, cabinet fastening boss portions 3g, obtained by machining female screws, are formed on the front surface of the rear cabinet 3b at positions corresponding to the cabinet fastening through holes 3e. As shown in FIG. 11, the front cabinet 3a is fixed to the rear cabinet 3b by inserting cabinet fastening screws 60 through the cabinet fastening through holes 3e and fastening them into the cabinet fastening boss portions 3g. Support mechanism fixing boss portions 3h are formed at positions corresponding to the pair of support mechanism fixing holes 3f. Note that an opening 6 for a rear display for displaying the time, etc., is formed in an upper portion of the rear cabinet 3b.

As shown in FIG. 3, the fixed casing 5 includes an operation section 7 provided therein for operating various functions of the mobile phone 1, including function keys 7a and letter keys 7b arranged on the front side. Letters on these keys 7a and 7b are drawn so that they are more legible when the fixed casing 5 is held in the portrait orientation. A main substrate, not shown, is provided on the rear side of these keys 7a and 7b. As shown in FIG. 1, a rectangular battery cover 8 is provided on the rear side of the fixed casing 5, with a battery (not shown) provided therein. The fixed casing 5 may be provided with a camera function, and the swivel casing 3 may also be provided with a simple camera. The swivel casing 3 or the fixed casing 5 includes a TV tuner, not shown provided therein, so that it can receive TV signals.

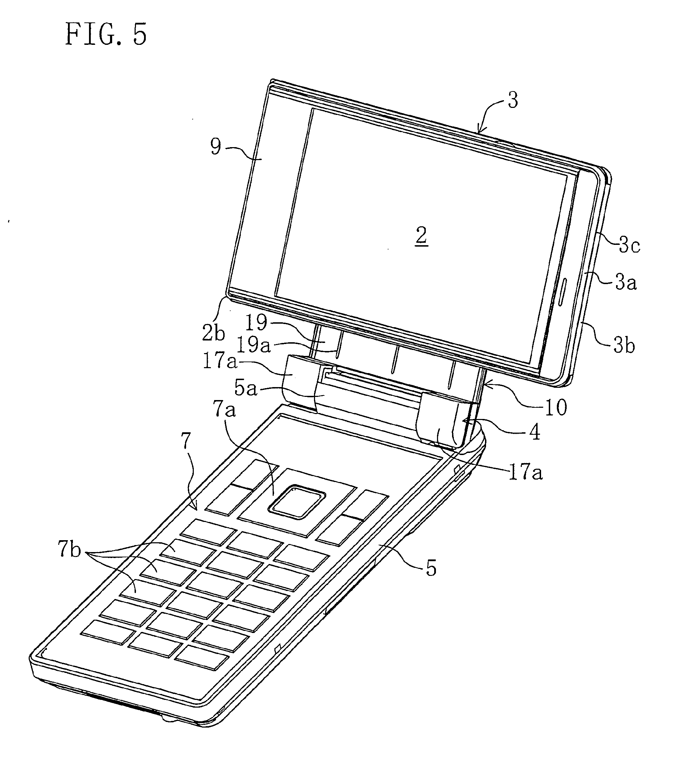

The swivel casing 3 is swivelably supported by a swivel support mechanism 10 so that it swivels from the portrait orientation shown in FIG. 3 to the landscape orientation shown in FIG. 5 in the clockwise direction as seen from the front side and from the landscape orientation back to the portrait orientation. The swivel casing 3 swivels with a predetermined distance from the hinge portion 4 (hinge boss portions 17a and 18a and a protruding portion 5a to be described later). Therefore, there is no need to round off the corner portions of the swivel casing 3, allowing the display 2 to be large. As shown in FIG. 5, the rear side of the fixed casing 5 can be placed on a placement surface such as the top of a desk with the swivel casing 3 being open in the landscape orientation.

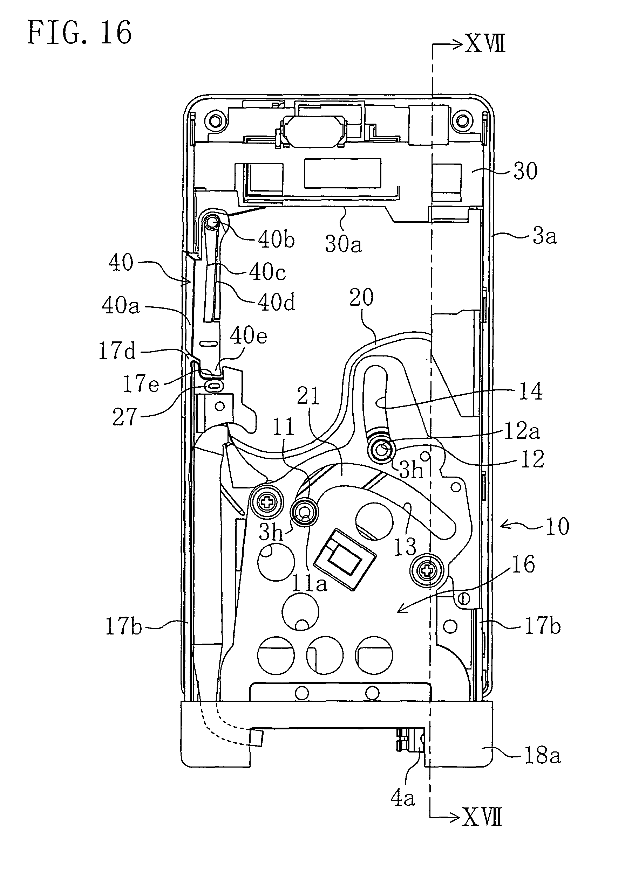

FIGS. 16 and 17 show a state where the rear cabinet 3b and a rear hinge portion casing 18 to be described later are removed, and a cross-sectional view thereof. The swivel support mechanism 10 includes a first slide pin 11 as the first slide member and a second slide pin 12 as the second slide member which slide during swiveling, and a first guide groove 13 as the first slide guide and a second guide groove 14 as the second slide guide for allowing the first slide pin 11 and the second slide pin 12 to slide in different directions.

While any of various shapes may be employed for the first guide groove 13 and the second guide groove 14, the first guide groove 13 is formed in an upwardly bulging curved shape, for example. The second guide groove 14 is formed above the first guide groove 13, and extends vertically in a curved shape. Particularly, in the present embodiment, the first slide guide extends in the horizontal direction, and has a greater inclination on the left side than on the right side as seen from the rear side. The second slide guide has a gently curved shape in which the lower end is slightly leftward deformed toward the upward direction. The first guide groove 13 and the second guide groove 14 are formed in a flat guide plate 16.

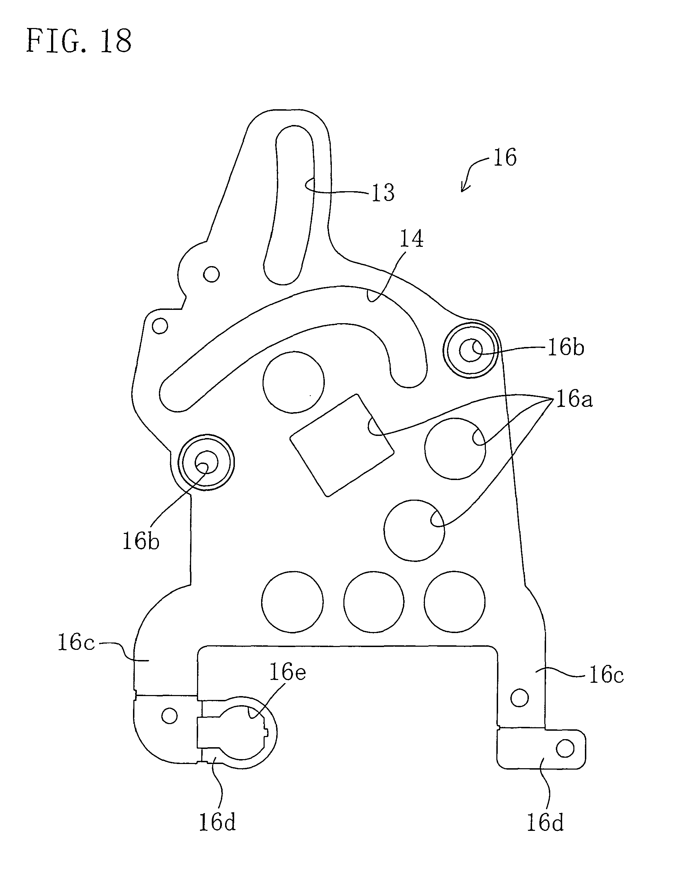

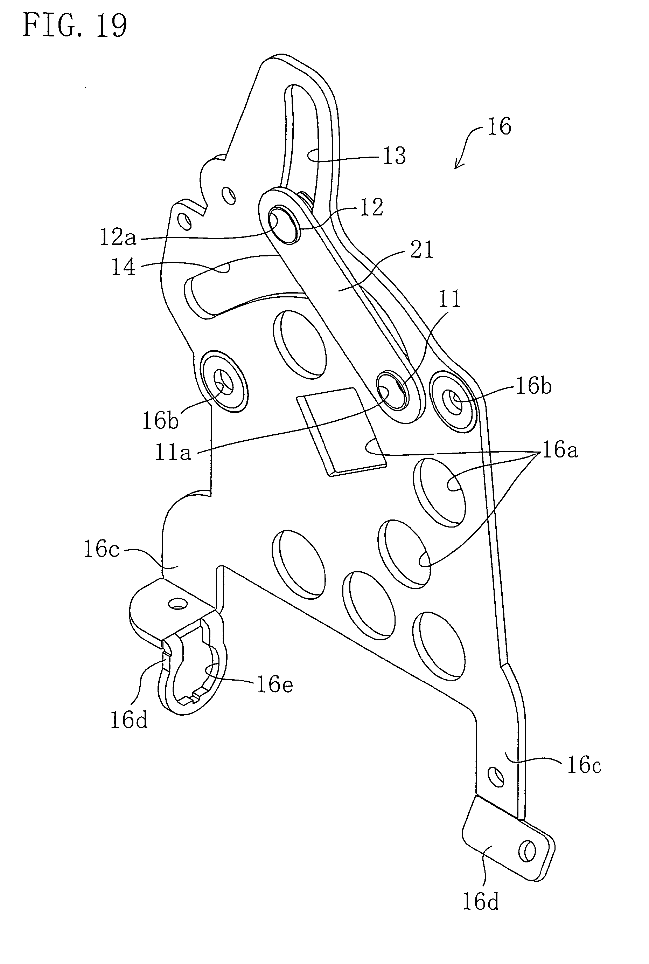

As shown in FIG. 18 in its pre-bending shape, the guide plate 16 is made of a stainless steel plate, for example, and includes the first guide groove 13 and the second guide groove 14 cut in an upper portion of the guide plate 16, with a plurality of circular or square-shaped through holes 16a cut below the first guide groove 13 and the second guide groove 14 for the purpose of reducing the weight. A pair of screw insertion holes 16b are formed on the left and on the right in a vertically intermediate section of the guide plate 16. The lower end of the guide plate 16 includes a pair of leg portions 16c extending in the downward direction. The pair of leg portions 16c each include an extension portion 16d extending in the right direction as seen from the rear side, and the left extension portion 16d includes a hinge shaft insertion hole 16e cut therein. On the other hand, no such hole is formed in the right extension portion 16d. As shown in FIG. 19, the pair of extension portions 16d are bent, thereby forming the guide plate 16.

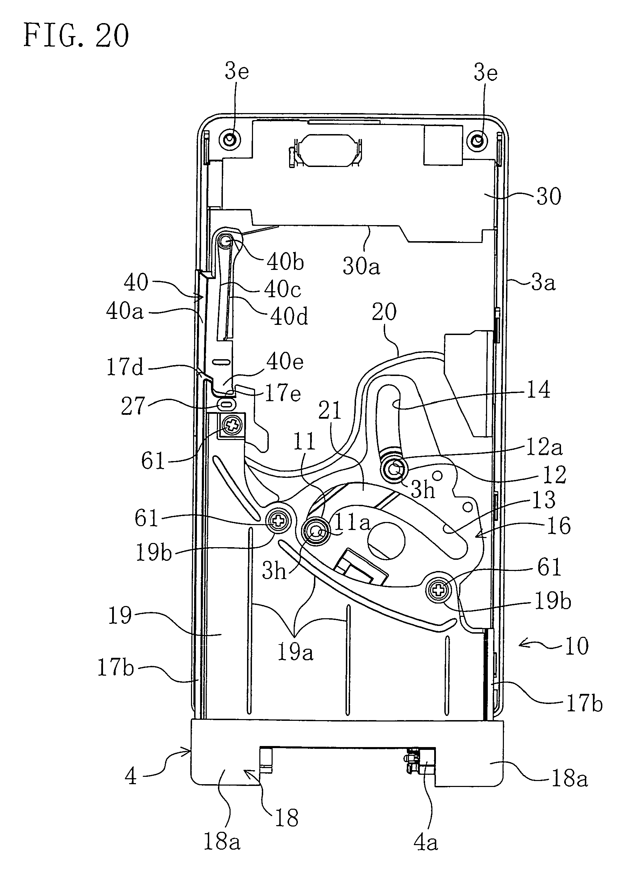

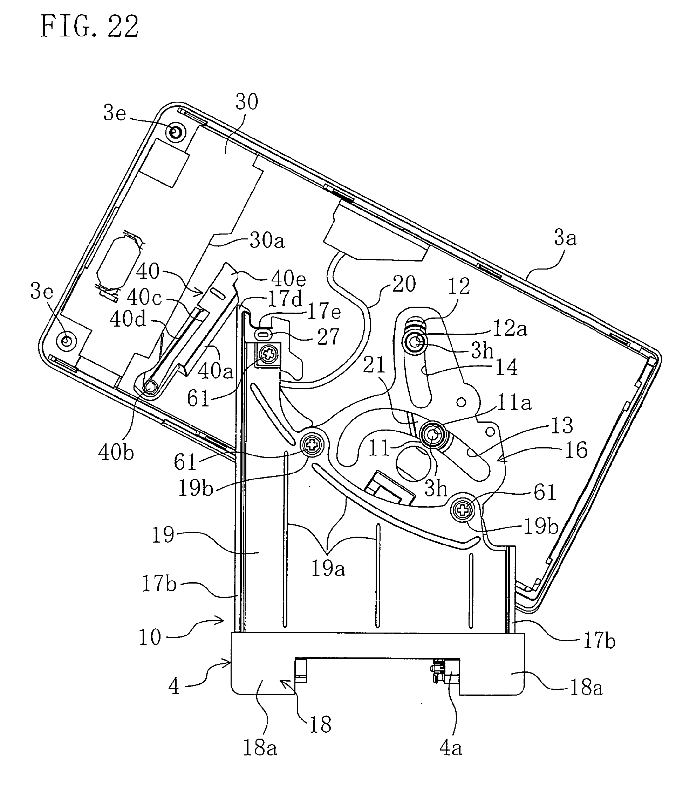

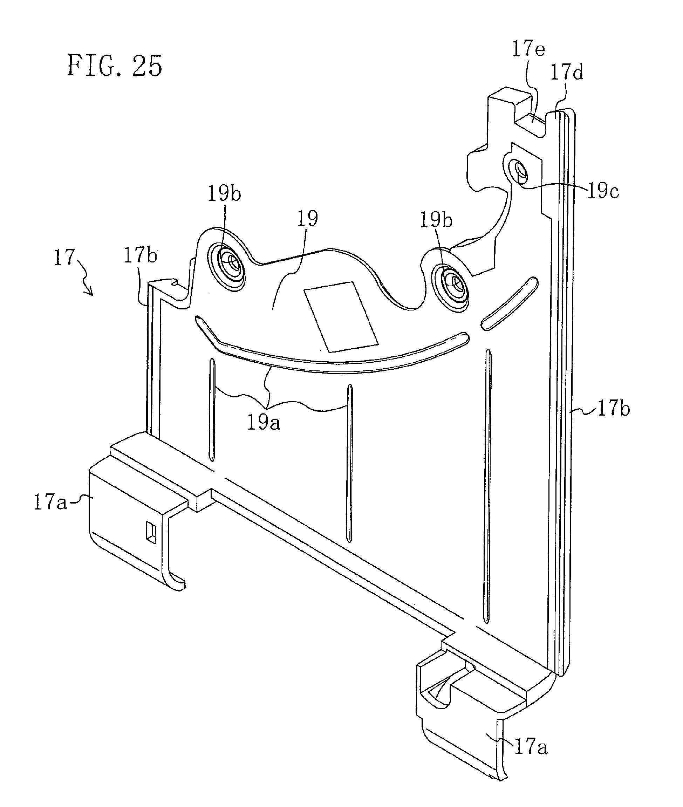

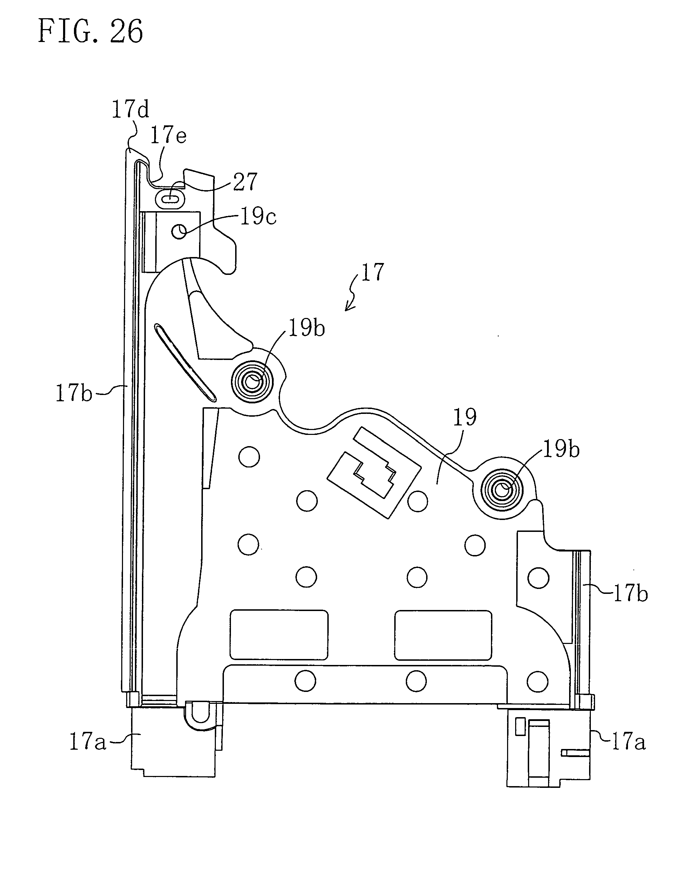

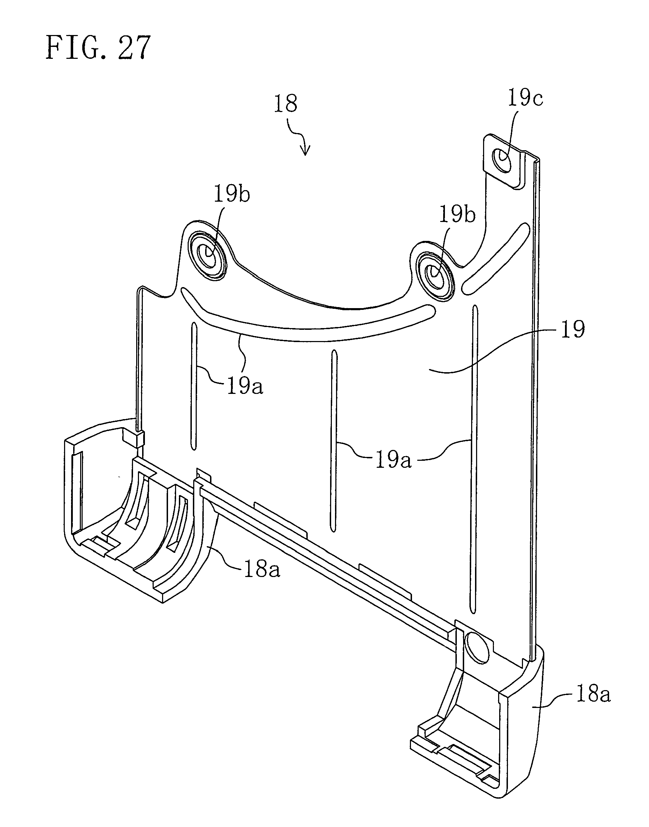

As shown in FIGS. 20-24, the guide plate 16 and the hinge portion 4 are interposed between a front hinge portion casing 17 and the rear hinge portion casing 18 which are separated from each other in the thickness direction. As shown in FIGS. 25 and 26, the front hinge portion casing 17 includes the left and right hinge boss portions 17a, which together form the hinge portion 4, and decorative side surface portions 17b extending upward from these hinge boss portions 17a to cover the left and right side surfaces of the guide plate 16, with the front side covered by a decorative thin plate 19 made of a metal. The decorative side surface portions 17b being of the same material and the same color as the rear cabinet 3b gives a good appearance. For example, the decorative thin plate 19 is made of a thin stainless plate which is press-formed and colored by painting, etc. The front hinge portion casing 17 and the decorative thin plate 19 are molded together when pouring a resin, for example. Similarly, as shown in FIG. 27, the rear hinge portion casing 18 includes the left and right hinge boss portions 18a, which together form the hinge portion 4, and the rear side is covered by the decorative thin plate 19 made of a metal. The rear hinge portion casing 18 and the decorative thin plate 19 are similarly molded together when pouring a resin. The pair of front and rear decorative thin plates 19 include a plurality of ribs 19a extending in the vertical direction or in a slant direction, and include screw insertion holes 19b both for securing the guide plate 16. Screw insertion holes 19c for securing the front and rear decorative thin plates 19 to each other are formed in an upper left portion as seen from the rear side.

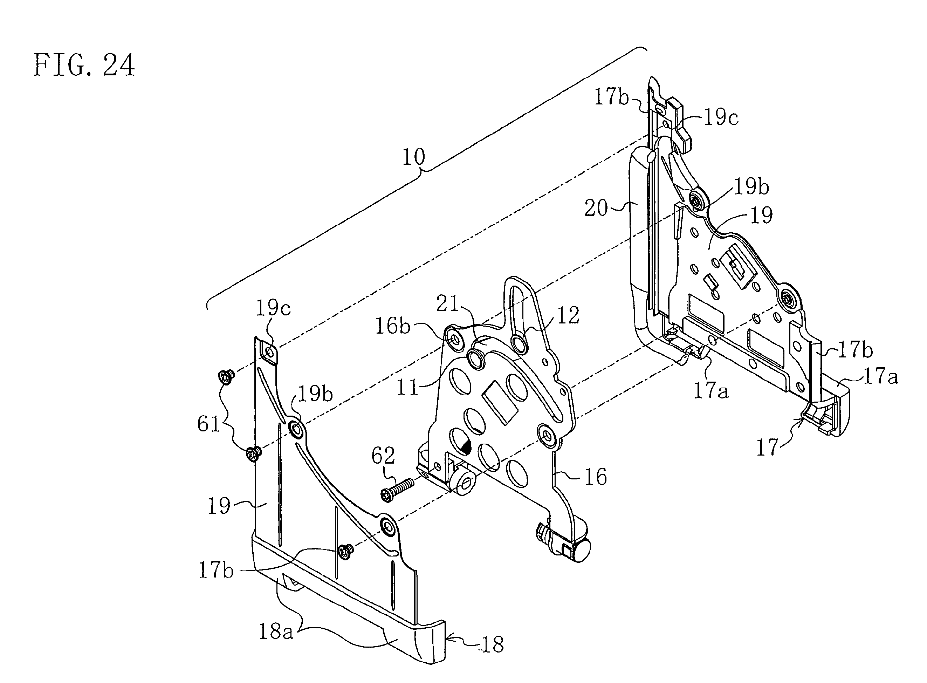

By fastening hinge portion fixing screws 61 into the screw insertion holes 16b, 19b and 19c, with the guide plate 16 interposed between the front hinge portion casing 17 and the rear hinge portion casing 18 as shown in FIG. 24, the guide plate 16 is connected to the hinge portion 4. Note that a screw 62 is a screw for securing the leg portion 16c to the hinge boss portion 17a.

With such a configuration of the swivel support mechanism 10, portions of the front hinge portion casing 17 and the rear hinge portion casing 18 that are hidden when the swivel casing 3 is in the portrait orientation are covered by the decorative thin plates 19. Therefore, the appearance of the portion of the swivel casing 3 that is exposed during swiveling is improved, in addition to improving the strength and the abrasion resistance while avoiding an increase in the thickness. The gap between the decorative thin plates 19 and the inside of the swivel casing 3 is minimized by means of the ribs 19a, thereby preventing the looseness during swiveling.

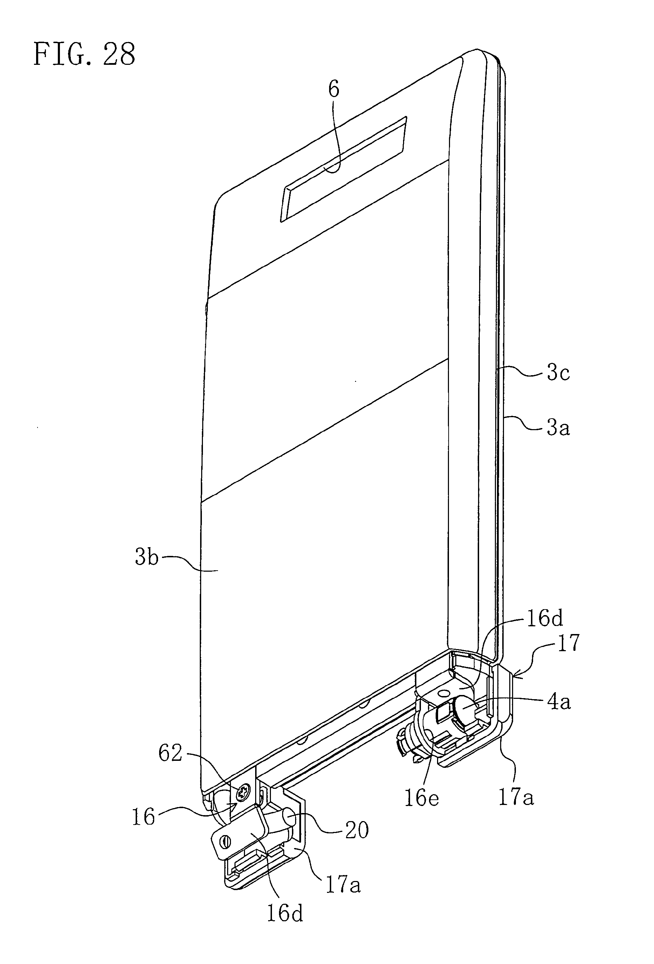

As shown in FIGS. 3 and 17, the hinge portion 4 includes the hinge boss portions 17a and 18a on the outer side on the left and on the right, and the protruding portion 5a formed on the upper portion of the fixed casing 5 and interposed between these hinge boss portions 17a and 18a. As shown in FIG. 28, the pair of extension portions 16d of the guide plate 16 are provided in the hinge boss portions 17a and 18a. A hinge shaft 4a is inserted through the hinge shaft insertion hole 16e of one of the extension portions 16d on the right side as seen from the rear side. The outer periphery of the hinge shaft 4a is unswivelably secured in the hinge boss portions 17a and 18a. On the other hand, the left-right inner end portion of the hinge shaft 4a is inserted into the protruding portion 5a of the fixed casing 5 and unswivelably secured therein so that the swivel casing 3 can be folded/unfolded with respect to the fixed casing 5 with a snap and held at predetermined angles by virtue of the hinge shaft 4a. Thus, by supporting the hinge shaft 4a with the guide plate 16 which is a rigid member, it is possible to obtain the hinge portion 4 with a high rigidity while avoiding an increase in the number of parts. A signal line 20 for electrically connecting the display substrate 2a with the main substrate is passed through the hinge boss portions 17a and 18a on the left side as seen from the rear side. Since an adverse influence such as noise occurs if the signal line 20 is passed through a metal hole such as the hinge shaft insertion hole 16e, the extension portion 16d is provided on the rear side of the signal line 20. As shown in FIG. 24, the signal line 20 is covered and protected by the front and rear decorative thin plates 19 so that it is not damaged during swiveling of the swivel casing 3.

On the other hand, as shown in FIG. 19, the first slide pin 11 and the second slide pin 12 include boss insertion holes 11a and 12a, respectively, at the centers thereof, through which the support mechanism fixing boss portions 3h of the rear cabinet 3b are inserted. The first slide pin 11 and the second slide pin 12 are locked to a plate-shaped tentative holding plate 21 by crimping their end portions while they are inserted through the first guide groove 13 or the second guide groove 14. With the first slide pin 11 and the second slide pin 12 assembled with the guide plate 16 as a unit, the support mechanism fixing boss portions 3h are inserted through the boss insertion holes 11a and 12a, and fastening members 63 are inserted through the support mechanism fixing holes 3f of the front cabinet 3a and fastened to the support mechanism fixing boss portions 3h, as shown in FIG. 11, thereby connecting the swivel support mechanism 10 to the swivel casing 3 while being interposed therein. If the first slide pin 11 and the second slide pin 12 are connected to the tentative holding plate 21, and the first slide pin 11 and the second slide pin 12 are engaged with the first guide groove 13 and the second guide groove 14, to provide the swivel support mechanism 10 as a unit in advance, as shown in FIG. 19, the swivel support mechanism 10, together with the tentative holding plate 21, is connected to the swivel casing 3 on the assembly line as shown in FIG. 11, thus making the assembly very easy. After the attachment, the tentative holding plate 21 serves as a reinforcement member.

The guide plate 16, the first slide pin 11, the second slide pin 12, the tentative holding plate 21, the front hinge portion casing 17, the rear hinge portion casing 18 and the decorative thin plate 19 together form the swivel support mechanism 10. The swivel support mechanism 10 is connected to the fixed casing 5 via the hinge portion 4 as described above.

A movement opening 25 for allowing the swivel support mechanism 10 to move therethrough is formed in a middle portion in a thickness direction of a side surface of the swivel casing 3, as shown in FIG. 1, etc. The movement opening 25 is formed along an edge portion of the rear cabinet 3b on the side of the partition surface 3c. The movement opening 25 is formed in an L-letter shape including a lower opening 25a provided on the lower side in the portrait orientation and a side opening 25b provided on the left side, as seen from the rear side.

The first guide groove 13 and the second guide groove 14 described above are formed in the flat stainless guide plate 16, thereby avoiding an increase in the thickness, and since it is only necessary to move the guide plate 16 having a small thickness, the front hinge portion casing 17 and the rear hinge portion casing 18 through the movement opening 25, it is possible to reduce the width of the movement opening 25 and to reduce the overall thickness of the swivel casing 3.

The front cabinet 3a, on which the display and the display substrate 2a are provided, needs to have a certain thickness, and the movement opening 25 is cut in an edge portion of the rear cabinet 3b, which does not need a large thickness, on the side of the partition surface 3c. Thus, the swivel support mechanism 10 is sandwiched between the front cabinet 3a and the rear cabinet 3b while avoiding an increase in the thickness.

As shown in FIG. 26, the decorative side surface portion 17b includes a projecting portion 27 that is projecting in the thickness direction of the swivel casing 3. On the other hand, as shown in FIG. 14, a generally fan-shaped slide depression 28, along which the projecting portion 27 slides during swiveling, is formed on the inner surface of the rear cabinet 3b of the swivel casing 3.

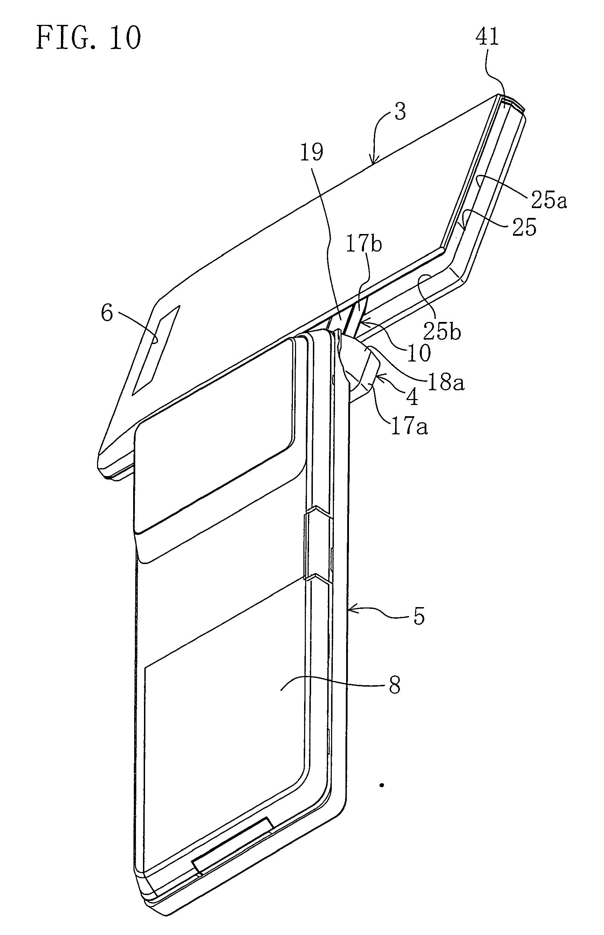

As shown in FIGS. 2 and 10, the movement opening 25 is covered by a side shield member 40 and a lower shield member 41 as the shield member that can open/close with the movement of the swivel support mechanism 10.

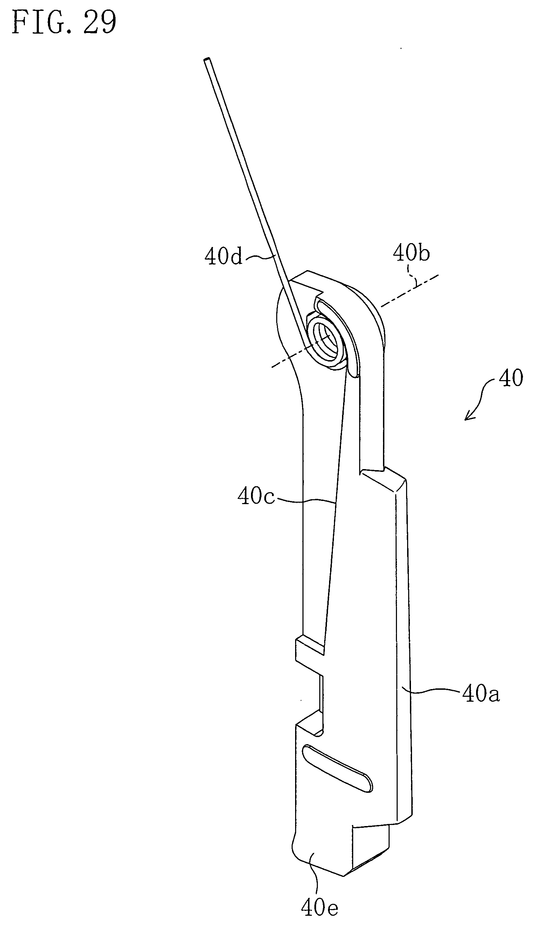

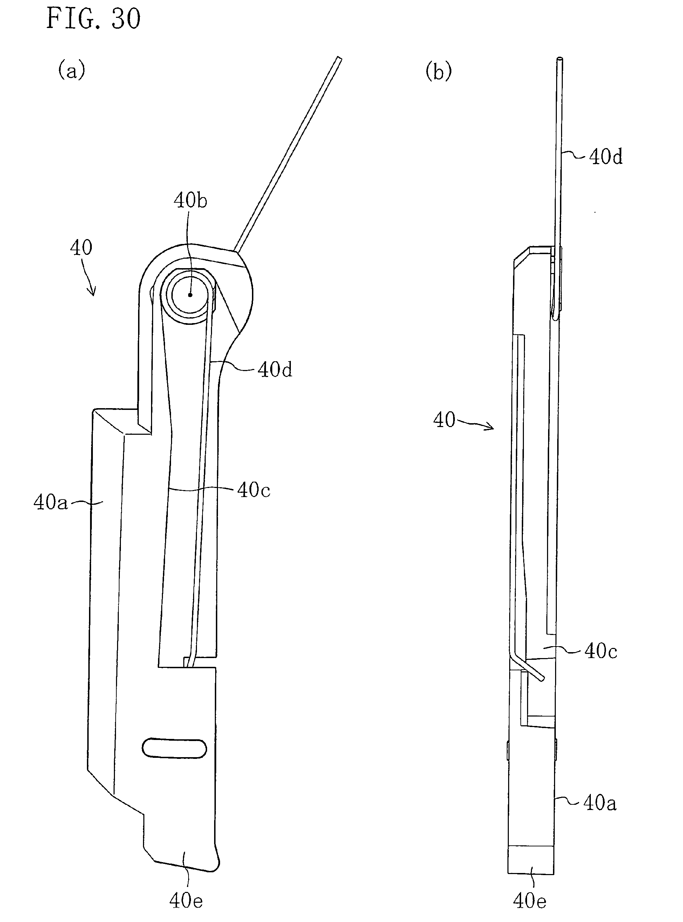

As shown in FIGS. 29 and 30, the side shield member 40 includes a side shield member main body 40a that closes the side opening 25b. As shown in FIG. 14, a pivotal shaft 40b is projecting on the opposite side of the side opening 25b with respect to the swivel support mechanism 10, i.e., in the vicinity of the upper end portion periphery. The side shield member main body 40a is pivotally supported by being fitted to the pivotal shaft 40b. The side shield member main body 40a is made of a molded resin product, for example, and a portion thereof that is exposed when the side opening 25b is closed with the side shield member main body 40a has a slant shape so as to be continuous with the periphery of the side opening 25b. The slant portion being of the same material and the same color as the rear cabinet 3b gives a good appearance. As shown in FIG. 16, electronic components 30 such as a rear display, a speaker and a sub-camera are arranged on the opposite side of the front cabinet 3a with respect to the hinge portion 4. A spring accommodating section 40c depressed toward the front side of the swivel casing 3 is formed inside the side shield member main body 40a. A coil spring 40d as the side biasing member is accommodated in the spring accommodating section 40c, with the coil portion rotatably fitted to the pivotal shaft 40b. One end of the coil spring 40d is in contact with a lower end portion 30a of the electronic components 30, with the other end fixed to the spring accommodating section 40c. The side shield member main body 40a is biased by the coil spring 40d in a direction of closing the side opening 25b, i.e., clockwise as seen from the rear side. As shown in FIG. 16, a pivotal end 40e is accommodated in a depression 17e as the pivot preventing depression for an upper end portion 17d of the front hinge portion casing 17. The depression 17e has such a shape that the pivotal end 40e can completely fit into the depression 17e. Therefore, even if the side shield member main body 40a is pushed inwardly by a finger when the swivel casing 3 shown in FIG. 16 is in the portrait orientation, the side shield member main body 40a is stopped by the depression 17e and does not pivot inwardly. On the other hand, if the side shield member main body 40a is pushed by the upper end portion 17d when the swivel casing 3 swivels, the pivotal end 40e moves out of the depression 17e, releasing the lock. The movement opening 25 is covered by the side shield member 40 and the decorative side surface portion 17b of the swivel support mechanism 10 as shown in FIG. 2 in the portrait orientation of the swivel casing 3, whereas the side shield member 40 is accommodated in the swivel casing 3 and the swivel support mechanism 10 is accommodated in the area which has been closed by the side shield member 40 as shown in FIG. 10 in the landscape orientation.

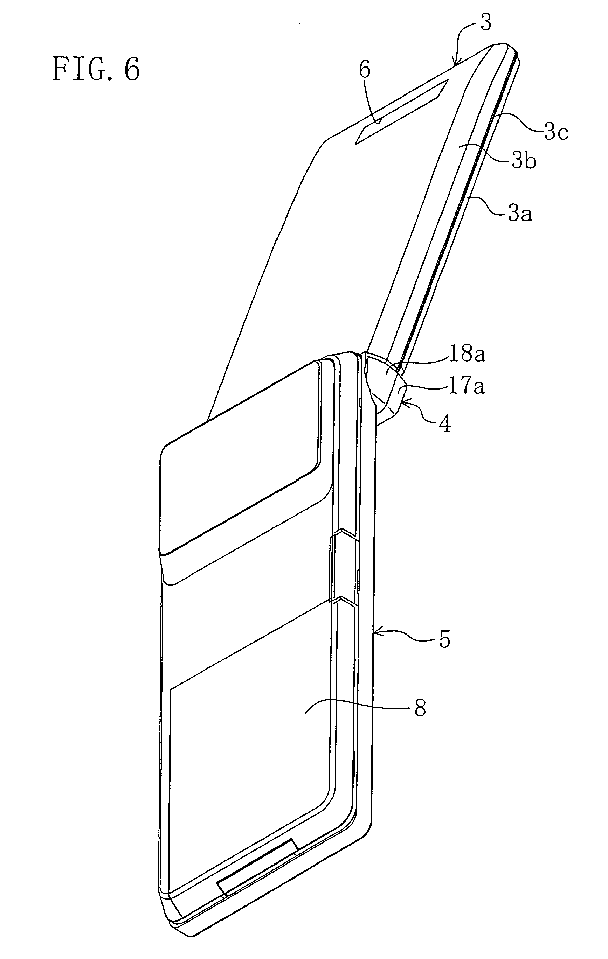

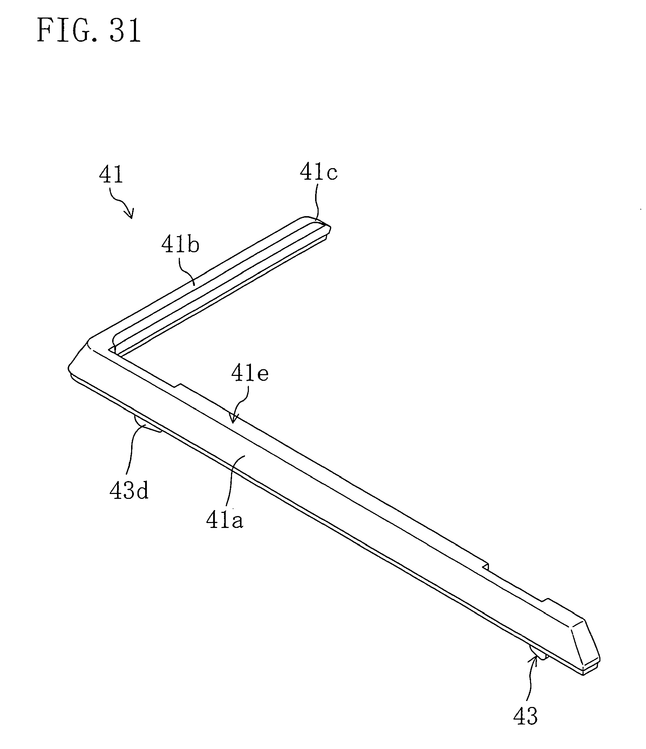

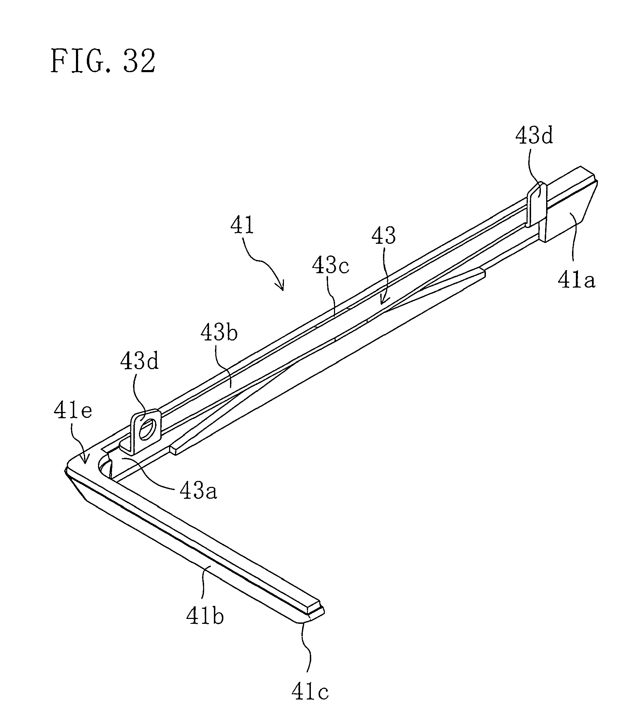

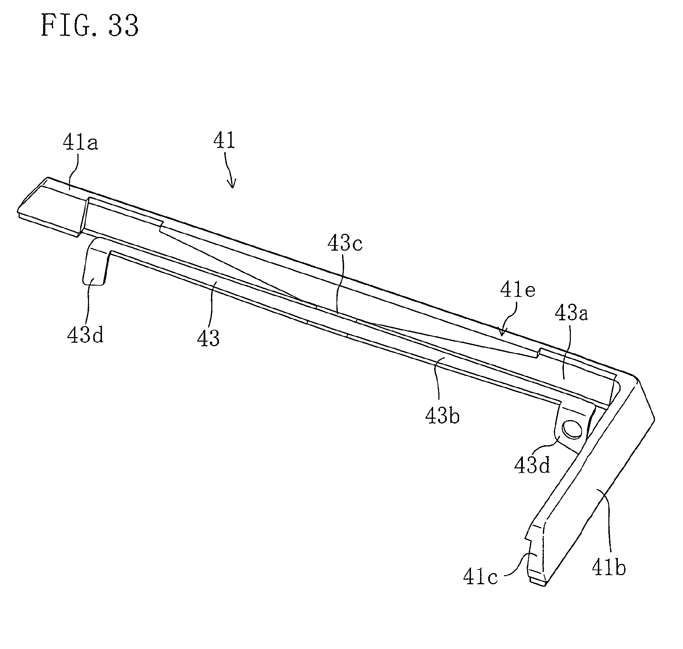

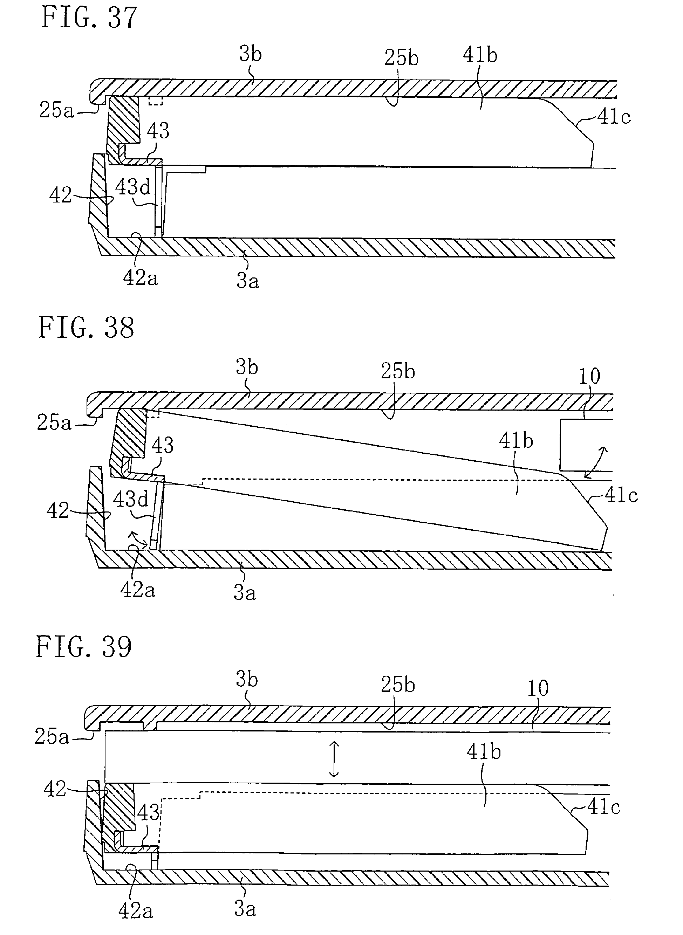

As shown in FIGS. 31-42, the lower shield member 41 slides while being inclined in the thickness direction of the swivel casing 3 by means of the swivel support mechanism 10 moving through the movement opening 25. The lower shield member 41 closes the movement opening 25 in a lower-end corner portion 2b of the swivel casing 3 in the landscape orientation of the swivel casing 3 shown in FIG. 10, and is completely accommodated in the swivel casing 3 in the portrait orientation shown in FIG. 6. As shown in FIG. 14, along the periphery of the movement opening 25 in the lower-end corner portion 2b of the swivel casing 3, a lower shield member accommodating section 42 having an L-letter shape as seen from above is formed which is surrounded by partition walls raised from the reverse surface of the swivel casing 3. The lower shield member 41 includes a lower shield member main body 41e having an L-letter shape as seen from above accommodated in the lower shield member accommodating section 42. The lower shield member main body 41e is made of a molded resin product, for example, and includes a lower appearance portion 41a for shielding the lower opening 25a, and a side appearance portion 41b shorter than the lower appearance portion 41a and shielding a portion of the side opening 25b. A tapered portion 41c is formed in a portion of the lower shield member main body 41e which the swivel support mechanism 10 first comes into contact with when the swivel casing 3 swivels from the landscape orientation to the portrait orientation, i.e., the distal end of the side appearance portion 41b. As shown in FIG. 38, the tapered portion 41c has a flat surface that is inclined in the direction of accommodating the lower shield member main body 41e in the lower shield member accommodating section 42 (the upper left direction as seen from the inner side of the swivel casing 3 in FIG. 38).

A blade spring 43 as the lower biasing member made of a stainless steel plate, or the like, is connected to the lower appearance portion 41a. The blade spring 43 is accommodated in the lower shield member accommodating section 42, together with the lower shield member main body 41e, and serves to bias the lower shield member main body 41e in the direction of covering the movement opening 25. The blade spring 43 includes a buried portion 43a integrally in-mold molded with the lower appearance portion 41a, and an exposed portion 43b accommodated in the lower shield member accommodating section 42, with the buried portion 43a and the exposed portion 43b connected together only by a connecting portion 43c at the center of the exposed portion 43b in the longitudinal direction. With an in-mold product, the blade spring 43 and the lower shield member main body 41e are integrally molded together, and therefore even when the blade spring 43 which is required to be elastic and the lower shield member main body 41e for which the appearance is considered more important are formed by different materials, the number of parts is reduced and a complicated shape can be realized since it is a molded product.

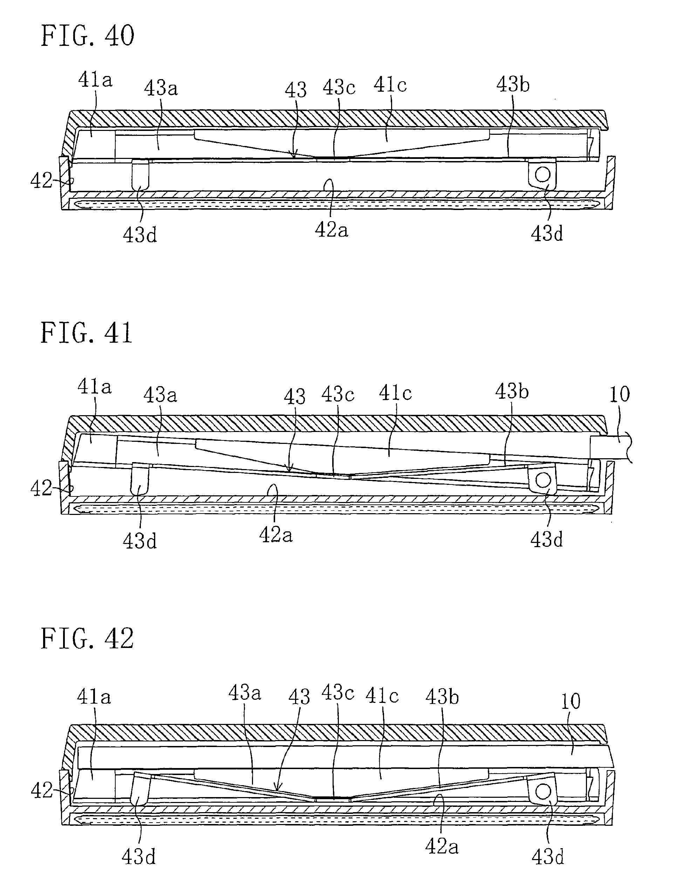

Leg portions 43d extending toward a bottom surface 42a are formed on opposite ends of the exposed portion 43b in the longitudinal direction. The pair of leg portions 43d are only in contact with the bottom surface 42a of the lower shield member accommodating section 42 and are not connected to the lower shield member accommodating section 42, and the exposed portion 43b is accommodated in the lower shield member accommodating section 42 so that it can be inclined or deformed. With such a configuration, as the swivel support mechanism 10 swivels, the side appearance portion 41b contacted by the tapered portion 41c c is gradually pressed in the thickness direction of the swivel casing 3 to pivot about the axis extending in the longitudinal direction of the lower appearance portion 41a, thereby inclining the leg portion 43d in the lower shield member accommodating section 42 as shown in FIG. 38, and it sways while twisting the connecting portion 43c when it is pressed on the side of the lower appearance portion 41a as shown in FIG. 41. When the entire lower appearance portion 41a is pushed down, the exposed portion 43b is substantially bent in a generally M-letter shape as the connecting portion 43c moves toward the bottom surface 42a as shown in FIG. 42, thus allowing smooth passage of the swivel support mechanism 10. After the passage of the swivel support mechanism 10, it is pushed back by the blade spring 43 to slide through the lower shield member accommodating section 42 to again close a portion of the lower opening 25a and the side opening 25b. The lower shield member 41 being of the same material and the same color as the rear cabinet 3b also gives a good appearance.

With such a configuration, in the portrait orientation shown in FIGS. 2 and 3, the side opening 25b is closed by the decorative side surface portion 17b and the side shield member 40, and the lower portions of the guide plate 16, the front hinge portion casing 17 and the rear hinge portion casing 18 of the swivel support mechanism 10 are accommodated in the lower opening 25a as shown in FIG. 42. In the landscape orientation shown in FIG. 10, the guide plate 16, the front hinge portion casing 17 and the rear hinge portion casing 18 are accommodated in a portion of the side opening 25b, and the rest of the side opening 25b and the lower opening 25a are closed by the lower shield member 41. When the side shield member 40 and the lower shield member 41 are closed, the surface of the side shield member 40 and the lower shield member 41 and the surface of the swivel casing 3 are substantially continuous with each other.

### -Functions-

Next, operations of the mobile phone 1 of the present embodiment will be described.

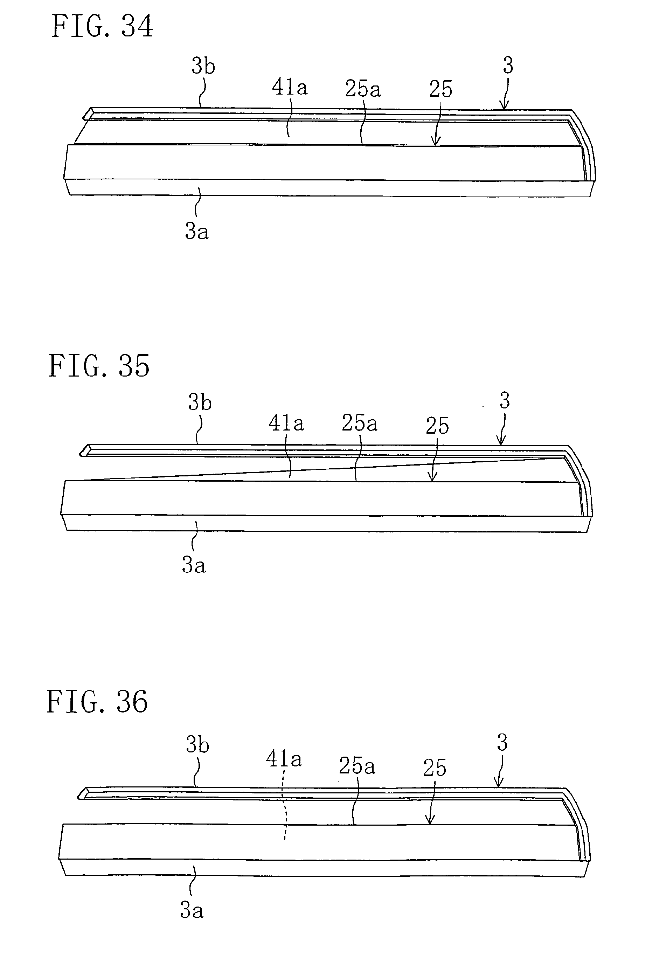

First, as shown in FIG. 2, when the mobile phone 1 is not in use or in a stand-by state, the swivel casing 3 and the fixed casing 5 are in a folded position. Then, the swivel support mechanism 10 is accommodated in the movement opening 25 of the swivel casing 3. That is, the side opening 25b is covered by the side shield member 40 and the decorative side surface portion 17b, and the surface of the swivel casing 3 appears to be substantially continuous. Thus, the swivel support mechanism 10 does not project, and it has a good appearance, appearing at a glance to be an ordinary clamshell mobile phone 1 with no swivel support mechanism 10, and since the movement opening 25 is completely covered by the side shield member main body 40a and the decorative side surface portion 17b of the swivel support mechanism 10, dust does not enter through the movement opening 25. As shown in FIG. 20, the pivotal end 40e is completely fitted into the depression 17e. Therefore, even if the side shield member main body 40a is pushed in by a finger, the side shield member main body 40a is stopped by the depression 17e and does not pivot inwardly. Therefore, one will not pinch a finger inadvertently. On the other hand, as for the lower shield member 41, as shown in FIGS. 36, 39 and 42, when the entire lower shield member main body 41e is pushed toward the bottom surface 42a with the pair of leg portions 43d in contact with the bottom surface 42a of the lower shield member accommodating section 42, since the buried portion 43a and the exposed portion 43b of the blade spring 43 are connected together only by the connecting portion 43c and are easily deformed, the exposed portion 43b is substantially bent so that the connecting portion 43c located in the middle between the pair of leg portions 43d moves toward the bottom surface 42a, and the lower shield member main body 41e slides so as to be completely accommodated in the lower shield member accommodating section 42.

As shown in FIG. 3, when the swivel casing 3 and the fixed casing 5 are opened, the display 2 and the operation section 7 appear. During a normal call operation or an email sending/receiving operation, one uses it while making key inputs on the operation section 7 with the display 2 in the portrait orientation.

On the other hand, when the user wishes to view a landscape image, e.g., when watching digital terrestrial television or using Internet connection, the user swivels the display 2 from the portrait orientation to the landscape orientation.

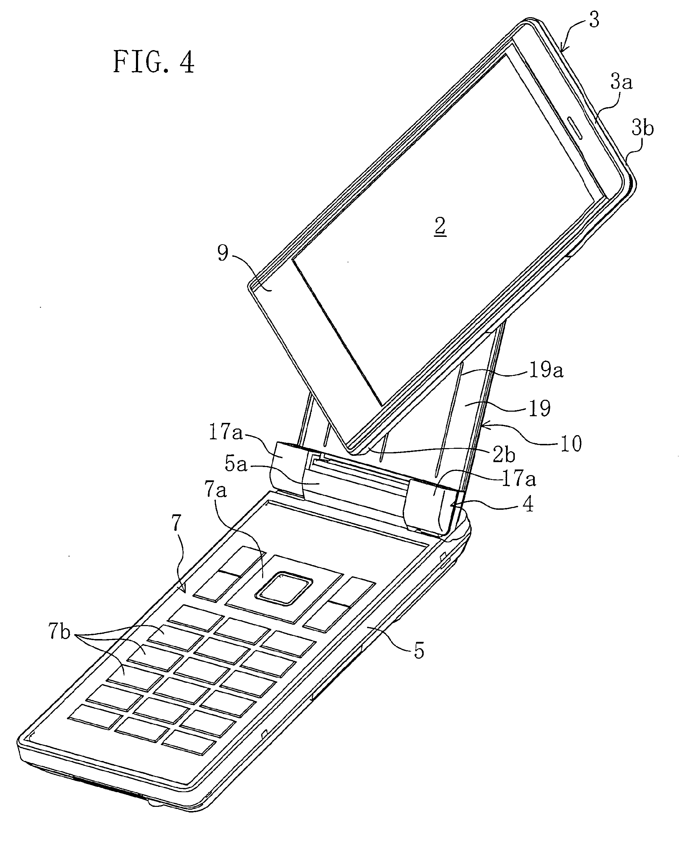

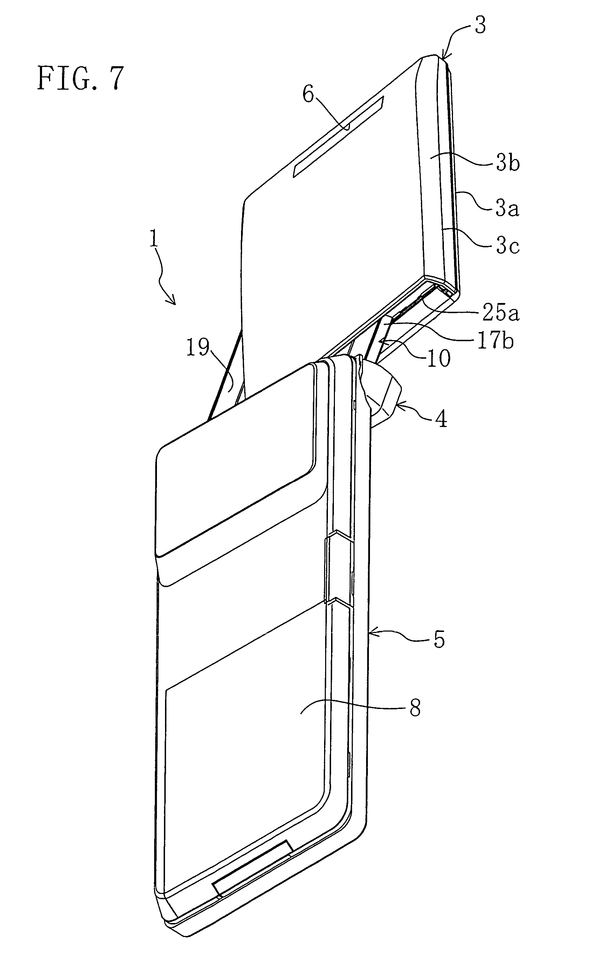

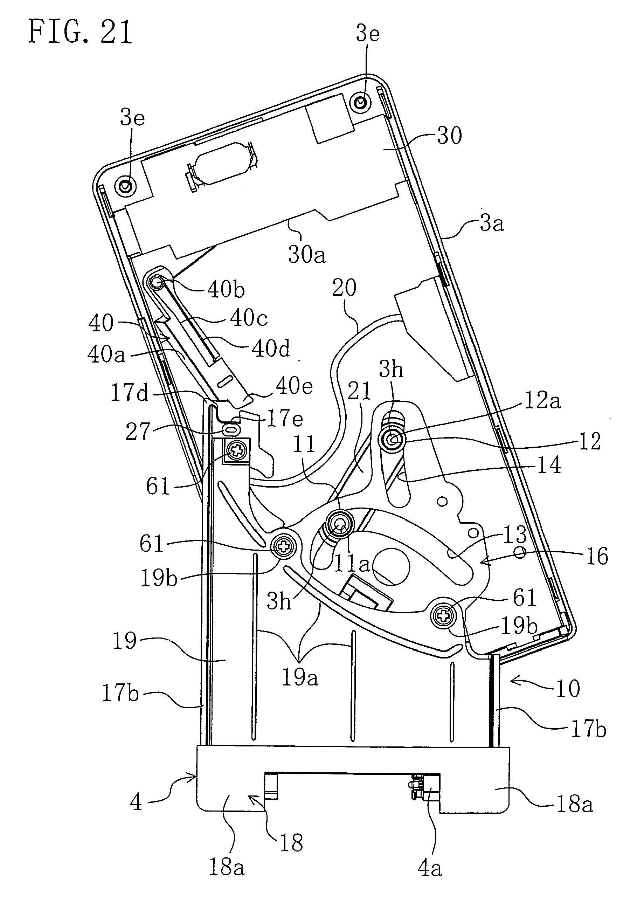

First, as shown in FIG. 4, the user swivels the lower-end corner portion 2b of the display 2 clockwise as seen from the front side. At this point, as shown in FIGS. 20 and 21, the second slide pin 12, which was at the lower end of the second guide groove 14 as seen from the rear side of the mobile phone 1, moves toward the upper end thereof, and the first slide pin 11, which was at the left end of the first guide groove 13, moves to the vicinity of the center thereof. At this point, since the upper end portion 17d of the front hinge portion casing 17 presses the pivotal end 40e, the side shield member 40 pivots. When the side shield member main body 40a is pushed by the upper end portion 17d along with the swivel, the pivotal end 40e moves out of the depression 17e, releasing the lock, as shown in FIG. 21. That is, since the first guide groove 13 has a greater inclination on the side where the first slide pin 11 is present at the start of the swivel, i.e., on the left side as seen from the rear side, the second slide pin 12 greatly moves upward. Moreover, since the lower end of the second guide groove 14 is inclined to the left as seen from the rear side toward the upward direction, even if the side shield member 40 is locked, the swivel casing 3 is guided in the direction of releasing the lock, i.e., in the upper left direction as seen from the rear side. Therefore, the pivotal end 40e, which is locked in the portrait orientation of the swivel casing 3, easily moves out of the depression 17e at the start of the swivel, thus releasing the lock. Thus, it is possible with a simple configuration to prevent the side shield member 40 from inhibiting the swivel of the swivel support mechanism 10. As shown in FIGS. 4 and 7, the swivel support mechanism 10 coming out of the movement opening 25 has a good appearance since the front surface and the rear surface thereof are covered by the decorative thin plate 19.

Then, the display 2 is switched to the landscape orientation shown in FIG. 5. At this point, as shown in FIGS. 21-23, the second slide pin 12, which was at the upper end of the second guide groove 14 as seen from the rear side of the mobile phone 1, moves to the lower end thereof, and the first slide pin 11, which was in the vicinity of the center of the first guide groove 13 moves to the right end thereof. Thus, by means of the swivel support mechanism 10, the second slide pin 12 of the display 2 slides through the second guide groove 14 simultaneously with the first slide pin 11 of the display 2 sliding through the first guide groove 13.

As shown in FIGS. 7-10 and 21-23, the swivel support mechanism 10 moves while gradually pushing away the side shield member 40, and after the movement, the side shield member 40 gradually returns to the original position. Simultaneously, as shown in FIGS. 35 and 41, when the swivel support mechanism 10 accommodated in the movement opening 25 moves out of the movement opening 25 as the swivel casing 3 swivels, the lower shield member main body 41e is biased by the deformed blade spring 43 in the direction of covering the movement opening 25, thus automatically sliding out of the lower shield member accommodating section 42 to gradually cover the movement opening 25. This eliminates the need for the operation of opening/closing the lower shield member 41. Thus, due to the function of the coil spring 40d and the blade spring 43, the movement opening 25 opens little by little during the pivot, and therefore dust is unlikely to enter the movement opening 25. It is also safe because one will unlikely pinch a finger.

The lower-end corner portion 2b is guided and supported so that it moves along a path with a certain interval kept from the hinge portion 4. Therefore, the display 2 does not interfere with the hinge portion 4 even without rounding off the lower end of the display 2 along the radius about the support shaft thereof as with conventional techniques. Thus, there is no need to round off the corner portion of the swivel casing 3, and the display 2 can be provided in a large size, thereby making the image easier to view.

Since the swivel support mechanism 10 always moves through the movement opening 25 during swiveling of the swivel casing 3, it is loose only within the clearance from the movement opening 25, thus realizing a stable swivel operation. By ensuring that the projecting portion 27 is always in contact with the slide depression 28 of the swivel casing 3, it is possible with a simple configuration to further prevent the looseness of the swivel casing 3. Moreover, by minimizing the gap between the decorative thin plate 19 and the inside of the swivel casing 3 by means of the ribs 19a of the decorative thin plate 19, the looseness during swiveling is prevented.

Since the display screen can be switched between the portrait orientation and the landscape orientation, it is possible to realize comfortable TV viewing or Internet connection in an appropriate screen orientation. With the swivel casing 3 in the landscape orientation, an image in the landscape orientation can be viewed without rotating the fixed casing 5, and one can therefore use the operation section 7 of the fixed casing 5 with an ordinary key arrangement as when the swivel casing 3 is in the portrait orientation. Therefore, one can comfortably perform an input operation with a two-way service such as TV shopping while watching an image in the landscape orientation.

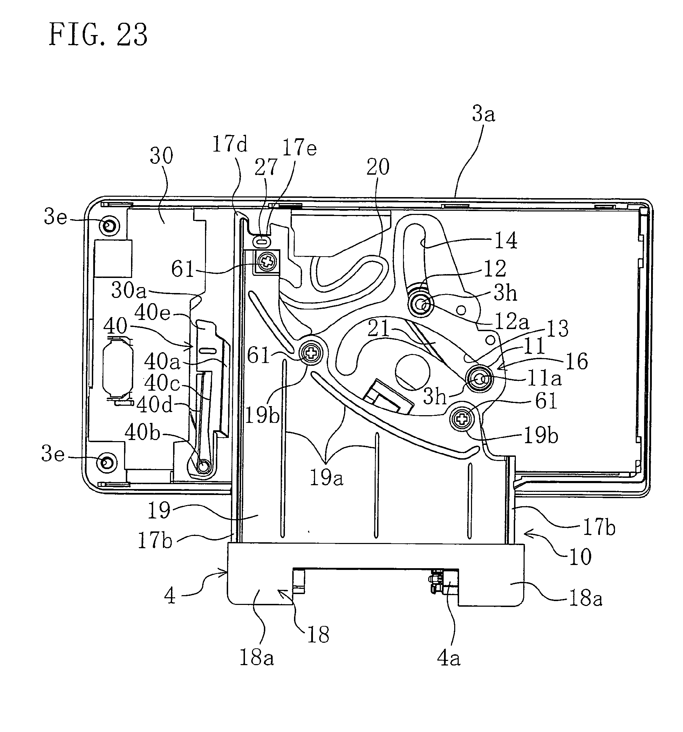

In the landscape orientation shown in FIG. 5, the central portion of the display 2 in the horizontal direction is located generally at the center of the swivel casing 3 in the horizontal direction. The fixed casing 5 can be held by hand in this orientation to see the swivel casing 3 in the landscape orientation. Then, one can use a setting so that an image in a landscape orientation can be displayed on the display 2 in a large size, and make key inputs with the operation section 7 so as to participate in a TV quiz program, enjoy TV shopping, make a bank transfer, etc., through TV. When the rear side of the fixed casing 5 is placed on the top of a desk with the swivel casing 3 being open in the landscape orientation, one can watch a TV image for a long time with the TV image displayed on the display 2 in the landscape orientation. As shown in FIG. 23, the side shield member 40 is accommodated generally perpendicular to the hinge portion 4 between the lower end portion 30a of the electronic components and the decorative side surface portion 17b of the front hinge portion casing 17. Thus, the side shield member 40 also swivels by 90° while the swivel casing 3 swivels by 90° from the portrait orientation to the landscape orientation. Also when the swivel casing 3 is in the landscape orientation, the swivel support mechanism 10 is accommodated in the movement opening 25 of the swivel casing 3, and the swivel support mechanism 10 enters the portion that has been closed by the side shield member 40. At this point, the surfaces of the lower shield member 41, the swivel support mechanism 10 and the swivel casing 3 are continuous with one another. Thus, a continuous surface is formed over the movement opening 25 and the vicinity thereof, which gives a good appearance and a good feel and prevents dust from entering the movement opening 25. Moreover, the swivel support mechanism 10 does not project, thus resulting in a good appearance.

After use, the lower-end corner portion 2b on the right side of the display 2 is pivoted counterclockwise, opposite to the above, as seen from the front side, to bring the display 2 back to the portrait orientation. Also in this process, the swivel support mechanism 10 moves while gradually pushing away the side shield member 40 and the lower shield member 41. As shown in FIG. 38, when the swivel casing 3 swivels from the landscape orientation to the portrait orientation, the swivel support mechanism 10 first comes into contact with the tapered portion 41c of the side appearance portion 41b in the side opening 25b. When the swivel support mechanism 10 further moves, the side appearance portion 41b inclines due to the function of the tapered portion 41c, and the lower appearance portion 41a swivels about the longitudinal direction. Also in this process, the leg portions 43d incline within the lower shield member accommodating section 42, and do not therefore inhibit the swivel.

As shown in FIG. 41, when the swivel support mechanism 10 moves into the lower opening 25a, the lower appearance portion 41 a is pushed down, and inclines about the connecting portion 43c while twisting the connecting portion 43c. Moreover, as the swivel support mechanism 10 moves, the lower appearance portion 41a is pushed down while deforming the exposed portion 43b. Therefore, the lower shield member main body 41e is smoothly accommodated in the lower shield member accommodating section 42. Thus, also in the counterclockwise direction, the side shield member 40 and the lower shield member 41 do not inhibit the swivel action of the swivel casing 3. After the movement, the side shield member 40 and the lower shield member 41 gradually return to their original positions due to the function of the coil spring 40d and the blade spring 43.

Then, the swivel casing 3 and the fixed casing 5 are folded up into a stand-by position.

### -Advantages of Embodiment-

With such a configuration, even if an unexpected impact is applied to the swivel casing 3, the load is transmitted also to the periphery of the movement opening 25, thus preventing the load from being localized only at the swivel support mechanism 10, effectively preventing damages to the swivel support mechanism 10.

The movement opening 25 allowing for the movement of the swivel support mechanism 10, which supports the swivel casing 3 so that it swivels between the portrait orientation and the landscape orientation, is formed in a middle portion in a thickness direction of the side surface of the swivel casing 3, and the movement opening 25 is covered by the side shield member 40 pivoted by the swivel support mechanism 10 and the decorative side surface portion 17b of the swivel support mechanism 10. Therefore, the swivel support mechanism 10 can be accommodated in the swivel casing 3 with a good appearance without inhibiting the swivel action.

The movement opening 25 allowing for the movement of the swivel support mechanism 10, which supports the swivel casing 3 so that it swivels between the portrait orientation and the landscape orientation, is formed in a middle portion in a thickness direction of the side surface of the swivel casing 3, and the lower shield member 41 closes the movement opening 25 in the lower-end corner portion 2b of the swivel casing 3 in the landscape orientation while being completely accommodated in the lower shield member accommodating section 42 in the portrait orientation. Therefore, the swivel support mechanism 10 can be accommodated in the swivel casing 3 with a good appearance without inhibiting the swivel action.

Even if an unexpected impact is applied to the swivel casing 3, the load is transmitted also to the periphery of the movement opening 25, thus preventing the load from being localized only at the swivel support mechanism 10, effectively preventing damages to the swivel support mechanism 10.

If the shapes of the first guide groove 13 and the second guide groove 14 are set as described in the embodiment above, it is possible to prevent the swivel casing 3 from contacting the hinge portion 4, and there is therefore no need to round off the corner portion of the swivel casing 3 and the swivel casing 3 can be provided in a large size. Therefore, it is possible to increase the size of the display 2 so that one can comfortably view a TV image or an Internet image. Moreover, by improving the shapes of the first guide groove 13 and the second guide groove 14, the pivotal end 40e of the shield member 40 can easily come out of the depression 17e, releasing the lock of the shield member 40 in the portrait orientation.

### -Variation of Embodiment-

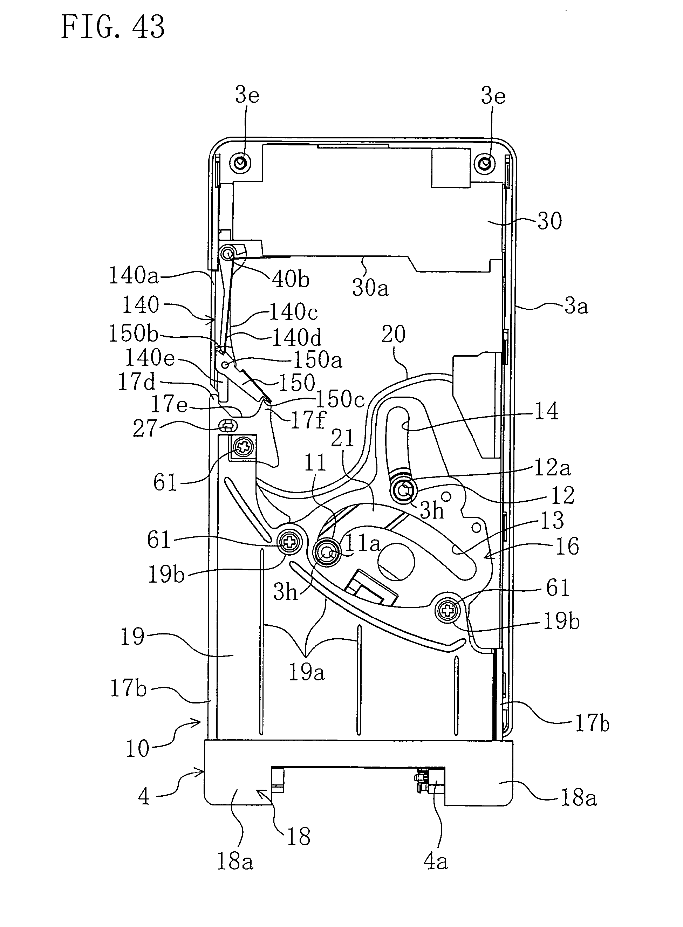

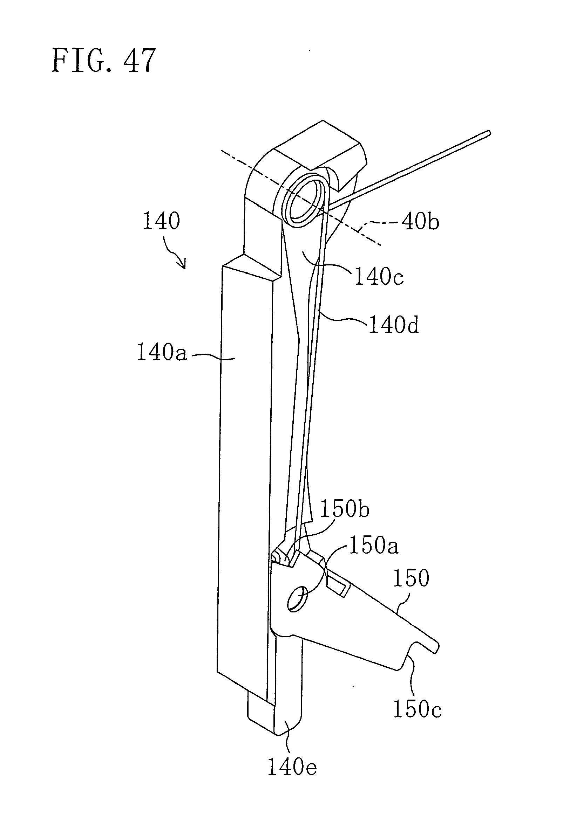

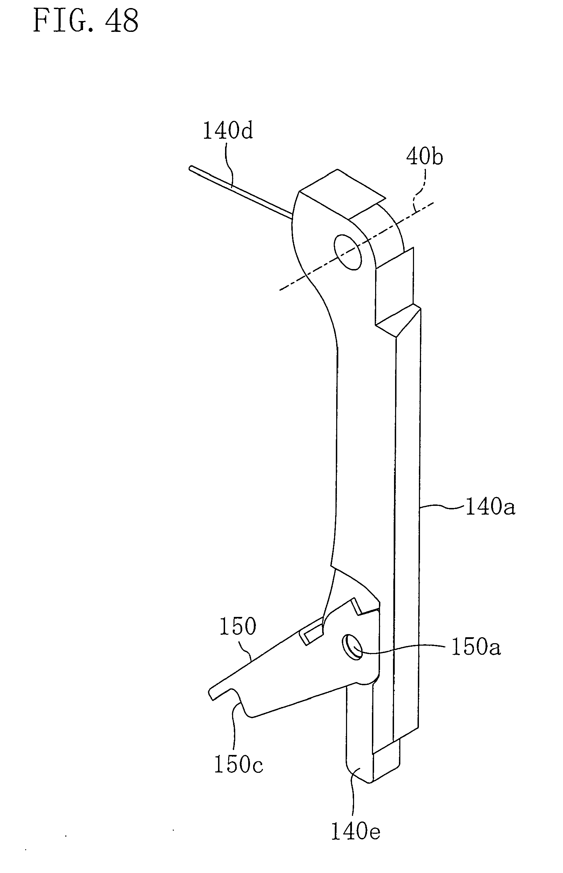

FIGS. 43-48 show a variation of the embodiment of the present invention, which differs from the embodiment above in that a side shield member 140 is provided with a pivot regulating member 150. Note that like elements to those of the embodiment above are denoted by like reference numerals and will not be described below.

As in the embodiment above, the side shield member 140 of this variation includes a side shield member main body 140a that closes the side opening 25b. The side shield member main body 140a is made of a molded resin product, for example, and is supported so that it can pivot about the pivotal shaft 40b provided on the rear cabinet 3b. A spring accommodating section 140c depressed toward the front side of the swivel casing 3 is formed inside the side shield member main body 140a, and a coil spring 140d is accommodated in the spring accommodating section 140c. When the swivel casing 3 is in the portrait orientation, a pivotal end 140e is accommodated in the depression 17e of the upper end portion 17d of the front hinge portion casing 17. However, the pivotal end 140e does not completely fit into the depression 17e, as in the embodiment above, but is caught on the side of the decorative side surface portion 17b so that the side shield member main body 140a does not any more swivel outwardly (in the clockwise direction as seen from the rear side). That is, the depression 17e is not serving as a pivot preventing depression. Regulating projections 17f are projecting on the left side and on the right side of the depression 17e.

The pivot regulating member 150, which is a feature of this variation, is pivotally provided on a pivotal shaft 150a on the side of the pivotal end 140e (the side of the hinge portion 4) of the side shield member 140. The pivot regulating member 150 is formed by bending a thin stainless plate, for example. One end of the coil spring 140d is in contact with the lower end portion 30a of the electronic components 30, and the other end thereof is hooked on a spring hook portion 150b which is formed by bending the pivot regulating member 150 in the thickness direction. Thus, by the coil spring 140d, the side shield member main body 140a is biased in the direction of closing the side opening 25b, and the pivot regulating member 150 is biased toward the regulating projection 17f. As described above, the side shield member 140 and the pivot regulating member 150 can be biased with a single coil spring 140d, thereby reducing the number of parts and the installment space.

When the swivel casing 3 is in the portrait orientation with the side shield member 140 closing the side opening 25b, an engagement depression 150c provided at the distal end of the pivot regulating member 150 is engaged with the regulating projection 17f.

Next, functions of this variation will be described. In the portrait orientation of the swivel casing 3 shown in FIG. 43, since the engagement depression 150c is engaged with the regulating projection 17f, even if the side shield member main body 140a is pressed by a finger, the pivot regulating member 150 is stopped by contacting the regulating projection 17f. Therefore, the side shield member main body 140a does not any more pivot inwardly, and even if the side shield member 140 is inadvertently pushed by a finger, one will not pinch the finger.

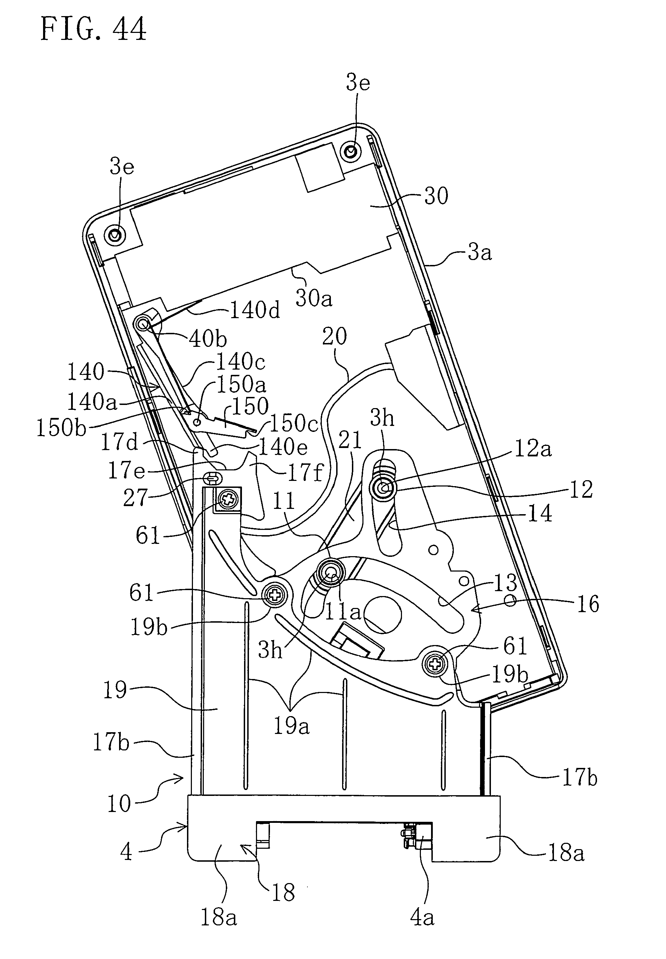

Next, when the swivel casing 3 is swiveled, the side shield member 140 is pushed to pivot by the upper end portion 17d of the swivel support mechanism 10 as shown in FIG. 44. Along with this, the engagement between the engagement depression 150c of the pivot regulating member 150 and the regulating projection 17f is automatically released. That is, the second slide pin 12 substantially moves upward since the first guide groove 13 has a large inclination on the side where the first slide pin 11 is present at the start of the swivel, and even if the side shield member 140 is locked by the pivot regulating member 150, the swivel casing 3 is guided in the direction of releasing the lock since the lower end of the second guide groove 14 is inclined to the left as seen from the rear side toward the upward direction. Thus, the lock of the pivot regulating member 150 can be easily released since the side shield member 140 pivots at the start of the swivel of the swivel casing 3 so that the regulating projection 17f moves away from the engagement depression 150c. Therefore, it is possible to reliably prevent the side shield member 140 from inhibiting the swivel action of the swivel casing 3 without performing an extra operation for releasing the lock.

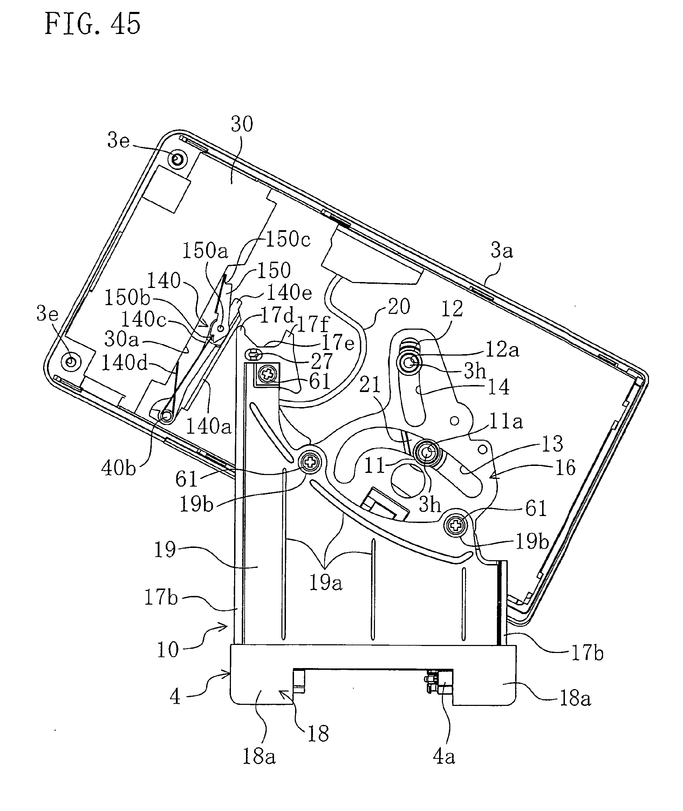

Moreover, when the swivel casing 3 is swiveled, the pivot regulating member 150 pivots by contacting the lower end portion 30a of the electronic components 30 as shown in FIG. 45.

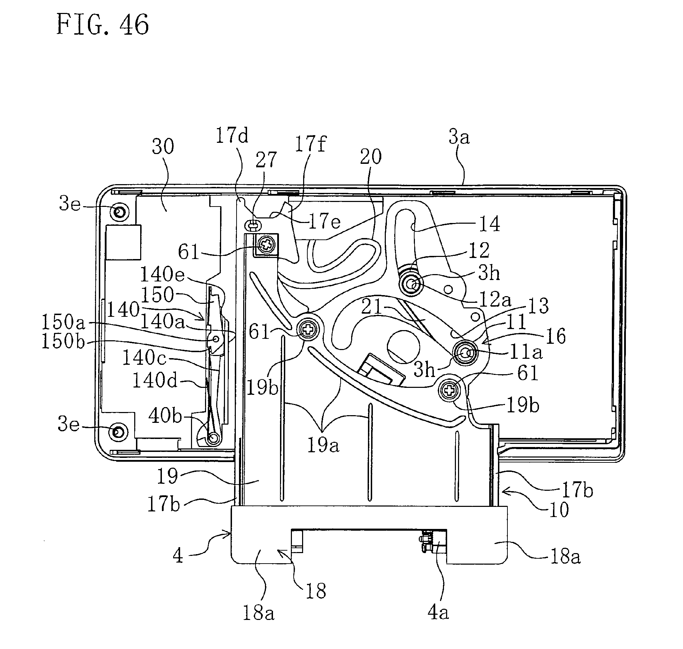

In the landscape orientation shown in FIG. 46, the side shield member main body 140a and the pivot regulating member 150 are accommodated in the swivel casing 3 while being substantially vertical to the hinge portion 4.

When returning from the landscape orientation to the portrait orientation, an operation opposite to the above is performed, so that it is locked again in the portrait orientation by the pivot regulating member 150.

### (Other Embodiments)

The above embodiment of the present invention may employ configurations as follows.

That is, while the display 2 is provided in the swivel casing 3 in the embodiment above, the display 2 may be provided both in the swivel casing 3 and in the fixed casing 5, or only in the swivel casing 3 or the fixed casing 5. While the operation section 7 is provided only on the fixed casing 5 in the embodiment above, it may be provided only on the swivel casing 3 with the display 2 provided on the fixed casing 5. The display 2 may be provided on the swivel casing 3, and a simple operation section 7 including function keys, etc., may be provided on a part of the swivel casing 3.

The shapes of the first guide groove 13, the second guide groove 14, the first slide pin 11 and the second slide pin 12 of the embodiment above are merely illustrative. That is, the first guide groove 13 and the second guide groove 14 may be guide apertures, guide grooves, guide rails, etc., for guiding movements along straight lines or curved lines, and may have a straight shape or a curved shape. The first slide pin 11 and the second slide pin 12 may be provided in a shaft shape, a U-shaped projection, etc., in accordance with the shape of the first guide groove 13 and the second guide groove 14.

The swivel support mechanism 10 may be provided with a biasing mechanism for assisting in the swivel by biasing at least one of the first slide pin 11 and the second slide pin 12. The biasing mechanism makes it easier to swivel the swivel casing 3, thus enabling the swivel operation with one hand, and the swivel casing 3 is stable in the landscape orientation or in the portrait orientation.

The biasing mechanism may be a twisted coil spring one end of which is pivotally connected to the first slide pin 11 or the second slide pin 12, with the other end pivotally connected to the guide plate 16. Then, it is possible to assist in the swivel of the swivel casing with a simple configuration.

The swivel support mechanism 10 may be provided with a biasing mechanism for assisting in the swivel by biasing the first slide pin 11. The biasing mechanism may be a pressing member one end of which is pivotally connected to the guide plate 16 with the other end pressing the first slide pin 11, and the biasing member may rotationally bias the pressing member. The biasing mechanism makes it easier to swivel the swivel casing 3, thus enabling the swivel operation with one hand, and the swivel casing 3 is stable in the landscape orientation or in the portrait orientation. Since the first slide pin 11 or the second slide pin 12 is pressed via the pressing member, it is possible to freely set the biasing direction of the biasing member which generates the biasing force. Therefore, since a compressive coil spring or a tensile coil spring may be used as the biasing member, it is possible to avoid an increase in the thickness even when the number of turns is increased, and it is possible to increase the biasing force while avoiding an increase in the thickness.

It is possible to obtain an optimal swivel path for the swivel casing 3 by optimizing the shape of the first guide groove 13 and the second guide groove 14. That is, while the swivel support mechanism 10 supports the swivel casing 3 so that the swivel casing 3 swivels from the portrait orientation to the landscape orientation in the clockwise direction as seen from the front side and so that it returns from the landscape orientation to the portrait orientation in the embodiment above, it may swivel in the counterclockwise direction. In such a case, the swivel support mechanism 10 and the movement opening 25 may be placed in left-right inverted positions. In such a case, the first slide guide has a greater inclination on the right side than on the left side as seen from the rear side, and the second slide guide has a gently curved shape in which the lower end is slightly rightward inclined toward the upward direction. Therefore, even if the side shield member 40 is locked in the portrait orientation, the swivel casing 3 swivels so as to rise in the upper right direction as seen from the rear side at the start of the swivel, and it is therefore possible to easily release the lock.

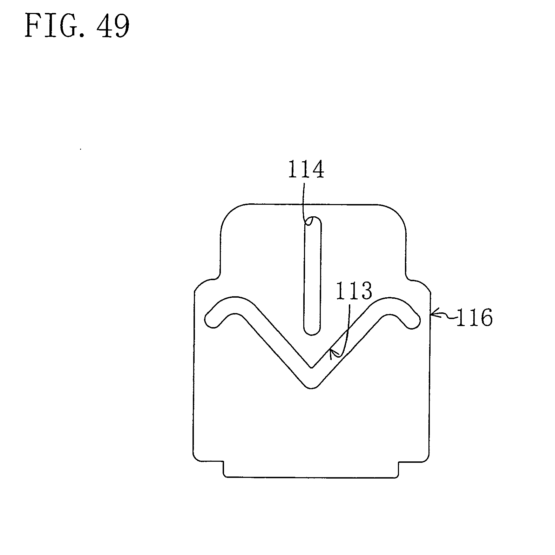

As shown in FIG. 49, for example, a guide plate 116 may be provided with a first guide groove 113 having a seagull-like shape resembling the shape of a seagull flying with wings spread out, with a second guide groove 114 placed above it, so that it can be swiveled and swiveled back either in the clockwise direction or in the counterclockwise direction. In such a case, large movement openings 25 may be provided equally on the left side surface and on the right side surface of the swivel casing 3. The side shield member 40 and the lower shield member 41 may be provided both on the left and on the right, and the lower opening 25a may be partially shielded by each of the left and right lower shield members 41. By further increasing the inclination on the left and right outer end portions of the first guide groove 113, it is easier to release the lock of the left or right side shield member 40 when starting the swivel from the portrait orientation.

While the first slide pin 11 and the second slide pin 12 are each tentatively held by the plate-shaped tentative holding plate 21 in the embodiment above, the present invention is not limited to this, and the support mechanism fixing boss portions 3h themselves may be used as the first slide pin 11 and the second slide pin 12.

While the hinge boss portions 17a and 18a are provided on the outer side on the left and right of the swivel casing 3 with the protruding portion 5a provided on the upper side of the fixed casing 5 in the embodiment above, a pair of hinge boss portions may protrude on the upper side of the fixed casing 5 with a protruding portion extending from the lower end of the swivel casing 3 being interposed between these hinge boss portions. In such a case, the extension portion 16d of the guide plate 16 may be extended to the protruding portion, and the signal line 20 may be passed through the hinge shaft insertion hole 16e.

While the mobile device is a clamshell mobile phone 1 in the embodiment above, it may be what is known as a candy bar-type mobile device in which the fixed casing 5 is connected to the swivel casing 3 so that it cannot be folded/unfolded. In such a case, the swivel support mechanism 10 may be connected directly to the fixed casing 5. Even with a candy bar-type mobile device, the swivel support mechanism 10 is accommodated in the movement opening 25 of the swivel casing 3, thus providing a good appearance.

Moreover, the fixed casing 5 may be moved together through the movement opening 25 during swiveling. In such a case, it is possible to realize a compact shape in which the fixed casing 5 is completely accommodated in the movement opening 25 of the swivel casing 3.

While the mobile device is a clamshell mobile phone in the embodiment above, it may be a PHS, a PDA, a PC, a mobile tool, an electronic dictionary, a calculator, a game device, etc.

In the embodiment above, the display 2 may be a liquid crystal display or an organic EL display. An organic EL display is a light-emitting display, hence a smaller power consumption, has a wider viewing angle than a liquid crystal display, and can be made thin since no backlight is needed. A liquid crystal display is more inexpensive and has a longer lifetime than an organic EL display.

Note that the embodiments described above are essentially preferred embodiments, and are not intended to limit the scope of the present invention, the applications thereof, or the uses thereof.

### INDUSTRIAL APPLICABILITY

As described above, the present invention is useful as a mobile phone, a PHS, a PDA, a PC, a mobile tool, an electronic dictionary, a calculator, a mobile game device, etc., in which a swivel casing is supported so that it swivels from the portrait orientation to the landscape orientation or from the landscape orientation to the portrait orientation.

### DESCRIPTION OF REFERENCE CHARACTERS

- 1: Clamshell mobile phone (mobile device)
- 2: Display
- 3: Swivel casing
- 3 a: Front cabinet
- 3b: Rear cabinet
- 3c: Partition surface
- 3f: Support mechanism fixing hole
- 3h: Support mechanism fixing boss portion
- 4: Hinge portion
- 4a: Hinge shaft
- 5: Fixed casing
- 7: Operation section
- 10: Swivel support mechanism
- 11: First slide pin (first slide member)
- 11a, 12a: Boss insertion hole
- 12: Second slide pin (second slide member)
- 13: First guide groove (first slide guide)
- 14: Second guide groove (second slide guide)
- 16: Guide plate
- 16d: Extension portion
- 16e: Hinge shaft insertion hole
- 17: Front hinge portion casing
- 18: Rear hinge portion casing
- 19: Decorative thin plate
- 19a: Ribs
- 21: Tentative holding plate
- 25: Movement opening
- 27: Projecting portion
- 28: Slide depression
- 40: Side shield member
- 40a: Side shield member main body
- 40b: Pivotal shaft
- 40d: Coil spring (side biasing member)
- 40e: Pivotal end
- 41: Lower shield member
- 41 c: Tapered portion
- 41 e: Lower shield member main body
- 42: Lower shield member accommodating section
- 42a: Bottom surface
- 43: Blade spring (lower biasing member)
- 43a: Buried portion
- 43b: Exposed portion
- 43c: Connecting portion
- 43d: Leg portion
- 63: Fastening member
- 113: First guide groove
- 114: Second guide groove
- 140: Side shield member
- 140a: Side shield member main body
- 140d: Coil spring (side biasing member)
- 140e: Pivotal end
- 150: Pivot regulating member
- 150c: Engagement depression (distal end side)

## Claims

1. A mobile device comprising:
a swivel casing;
a swivel support mechanism for supporting the swivel casing so that the swivel casing swivels from a portrait orientation to a landscape orientation or from the landscape orientation to the portrait orientation; and
a movement opening formed in a middle portion in a thickness direction of a side surface of the swivel casing for allowing for a movement of the swivel support mechanism therethrough.

2. The mobile device of claim 1, wherein
the swivel support mechanism is connected to a fixed casing, and
a display is provided in at least one of the swivel casing and the fixed casing.

3. The mobile device of claim 2, wherein
a display is provided in the swivel casing, and
an operation section is provided in the fixed casing.

4. The mobile device of one of claims 1 to 3, wherein
the swivel support mechanism includes:
a first slide member and a second slide member which slide during swiveling; and
a first slide guide and a second slide guide for allowing the first slide member and the second slide member to slide in different directions.

5. The mobile device of claim 4, wherein
the first slide member and the second slide member are connected to the swivel casing, and
the first slide guide and the second slide guide are formed in a flat guide plate, and the guide plate can move through the movement opening during swiveling.

6. The mobile device of claim 4 or 5, wherein
the swivel casing is formed by a front cabinet and a rear cabinet connected together by a partition surface parallel to a thickness direction,
the display is fitted into the front cabinet, and
the movement opening is formed by cutting off an edge portion of the rear cabinet on a side of the partition surface.

7. The mobile device of claim 6, wherein
a pair of support mechanism fixing boss portions are formed on a front side of the rear cabinet,
support mechanism fixing holes are formed in the front cabinet at positions corresponding to the pair of support mechanism fixing boss portions,
the first slide member and the second slide member include boss insertion holes through which the support mechanism fixing boss portions are inserted, and
fastening members are inserted through, and fastened to, the support mechanism fixing holes with the support mechanism fixing boss portions inserted through the boss insertion holes, thereby connecting the swivel support mechanism to the swivel casing while being interposed therein.

8. The mobile device of claim 7, wherein
the first slide member and the second slide member are inserted through the support mechanism fixing boss portions while being tentatively held by a plate-shaped tentative holding plate.

9. The mobile device of one of claims 4 to 8, wherein
the swivel support mechanism includes a biasing mechanism for assisting in the swivel by biasing at least one of the first slide member and the second slide member.

10. The mobile device of one of claims 1 to 9, comprising
a hinge portion for foldably connecting the swivel casing with the fixed casing,
wherein the swivel support mechanism is connected to the fixed casing via the hinge portion.

11. The mobile device of claim 10, wherein
the swivel casing swivels with a predetermined distance from the hinge portion.

12. The mobile device of claim 10 or 11, wherein
an end portion of the guide plate on a side of the hinge portion is bent, and
the hinge portion includes a hinge shaft insertion hole, and a hinge shaft of the hinge portion is inserted through the hinge shaft insertion hole.

13. The mobile device of one of claims 10 to 12, wherein
the guide plate and the hinge portion are interposed between a front hinge portion casing and a rear hinge portion casing which are separated from each other in the thickness direction, and
portions of the front hinge portion casing and the rear hinge portion casing that are hidden when the swivel casing is in the portrait orientation are each covered by a decorative metal thin plate.

14. The mobile device of claim 13, wherein
the decorative thin plate includes a plurality of ribs projecting on a front side.

15. The mobile device of one of claims 10 to 14, wherein
a rear side of the fixed casing can be placed on a placement surface with the swivel casing being open in the landscape orientation.

16. The mobile device of one of claims 1 to 9, wherein
the fixed casing is connected to the swivel casing so that the fixed casing cannot be folded/unfolded with respect to the swivel casing, and
the swivel support mechanism is connected directly to the fixed casing.

17. The mobile device of claim 16, wherein
the fixed casing can move through the movement opening during swiveling.

18. The mobile device of one of claims 1 to 17, wherein
the swivel support mechanism includes a projecting portion projecting in a thickness direction of the swivel casing, and
the swivel casing includes a slide depression along which the projecting portion slides during swiveling.

19. The mobile device of one of claims 1 to 18, comprising
a side shield member pivoted by the swivel support mechanism which moves as the swivel casing swivels from the portrait orientation to the landscape orientation or from the landscape orientation to the portrait orientation,
in the portrait orientation, the movement opening is covered by the side shield member and a side surface of the swivel support mechanism, and
in the landscape orientation, the side shield member is accommodated in the swivel casing, and the swivel support mechanism is accommodated in an area which has been closed by the side shield member.

20. The mobile device of claim 19, wherein
the side shield member includes:
a side shield member main body that can pivot about a pivotal shaft provided in a vicinity of an end portion periphery of the movement opening in the swivel casing that is opposite to the swivel support mechanism, and
a side biasing member for biasing the side shield member main body in a direction of covering the movement opening.

21. The mobile device of claim 19 or 20, wherein
when the side shield member is closed in the portrait orientation, a surface of the side shield member, a side surface of the swivel support mechanism, and a surface of the swivel casing are continuous with one another.

22. The mobile device of claim 20 or 21, wherein
the side shield member pivots as a pivotal end of the side shield member opposite to the pivotal shaft is pushed by a side end portion of the side shield member of the swivel support mechanism.

23. The mobile device of claim 22, wherein
the side shield member includes a pivot regulating member for regulating inward pivoting of the side shield member even if the side shield member is pressed when the movement opening is closed by the side shield member in the portrait orientation.

24. The mobile device of claim 23, wherein
the pivot regulating member is pivotally provided on a pivotal end side of the side shield member, and
a regulating projection with which a distal end side of the pivot regulating member engages when the side shield member is closed is provided at an end portion of the swivel support mechanism on a side of the side shield member.

25. The mobile device of claim 24, wherein
the pivot regulating member is biased by the side biasing member toward the regulating projection.

26. The mobile device of claim 25, wherein
the engagement between the distal end side of the pivot regulating member and the regulating projection of the swivel support mechanism is released as the side shield member pivots by being pushed by the side end portion of the side shield member of the swivel support mechanism.

27. The mobile device of claim 22, wherein
a pivot preventing depression with which the pivotal end of the side shield member engages when the side shield member is closed in the portrait orientation to prevent the side shield member from pivoting is provided at an end portion of the swivel support mechanism on a side of the side shield member.

28. The mobile device of one of claims 1 to 27, comprising
a lower shield member made to slide in a thickness direction of the swivel casing by the swivel support mechanism moving through the movement opening so as to close the movement opening in a corner portion of the swivel casing in the landscape orientation, and to be completely accommodated in the swivel casing in the portrait orientation.

29. The mobile device of claim 28, wherein
the lower shield member includes:
a lower shield member main body having an L-letter shape as seen from above which can be accommodated in a lower shield member accommodating section provided in a periphery of the movement opening in a corner portion of the swivel casing; and
a lower biasing member accommodated in the lower shield member accommodating section for biasing the lower shield member main body in a direction of covering the movement opening.

30. The mobile device of claim 28 or 29, wherein
a tapered portion for guiding the lower shield member main body in such a direction that the lower shield member main body is accommodated in the lower shield member accommodating section is formed in a portion of the lower shield member main body which the swivel support mechanism first comes into contact with when the swivel casing swivels from the landscape orientation to the portrait orientation.

31. The mobile device of claim 29 or 30, wherein
the lower biasing member is in-mold molded along one side of the lower shield member main body.

32. The mobile device of claim 31, wherein
the lower biasing member is a blade spring, wherein: a buried portion of the blade spring buried in the lower shield member main body and an exposed portion thereof exposed to an outside from the lower shield member main body are connected together only by a connecting portion at a center of the exposed portion in a longitudinal direction; leg portions formed at opposite ends of the exposed portion in the longitudinal direction are in contact with a bottom surface of the lower shield member accommodating section; and the lower shield member main body inclines so as to twist the connecting portion and the exposed portion is deformed so that the connecting portion slides in a thickness direction of the swivel casing.

33. The mobile device of one of claims 28 to 32, wherein
when the movement opening is completely closed by the lower shield member in the landscape orientation, a surface of the lower shield member and a surface of the swivel casing are continuous with each other.
